(19) Europäisches Patentamt
European Patent Office
Office européen des brevets

(11) Publication number: 0 264 274 A2

# (12) EUROPEAN PATENT APPLICATION

(21) Application number: 87309095.5

(51) Int. Cl.[4]: G 11 B 7/24

(22) Date of filing: 14.10.87

(30) Priority: 14.10.86 JP 244609/86
23.10.86 JP 253301/86

(43) Date of publication of application:
20.04.88 Bulletin 88/16

(84) Designated Contracting States: DE FR GB

(71) Applicant: CANON KABUSHIKI KAISHA
30-2, 3-chome, Shimomaruko
Ohta-ku Tokyo (JP)

(72) Inventor: Oguchi, Yoshihiro
36-17, Fujigaoka 2-chome Midori-ku
Yokohama-shi Kanagawa-ken (JP)

Sugata, Hiroyuki
36-17, Fujigaoka 2-chome Midori-ku
Yokohama-shi Kanagawa-ken (JP)

Miura, Kyo
709-3-306, Kamitsuruma
Sagamihara-shi Kanagawa-ken (JP)

Fukui, Tetsuro
1458-4, Kajigaya Miyamae-ku
Kawasaki-shi Kanagawa-ken (JP)

Takasu, Yoshio
6-7-405, Toyogaoka 2-chome
Tama-shi Tokyo (JP)

(74) Representative: Beresford, Keith Denis Lewis et al
BERESFORD & Co. 2-5 Warwick Court High Holborn
London WC1R 5DJ (GB)

## (54) Optical recording medium.

(57) An optical recording medium comprises at least one polymethine dye selected from the formulae [1-I] through [2-IV] and a compound selected from aminium salt compounds and diimonium salt compounds contained in the recording layer.

Formula [1-I]

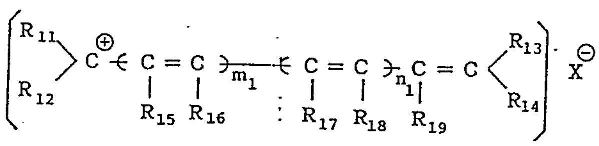

Formula [2-I]

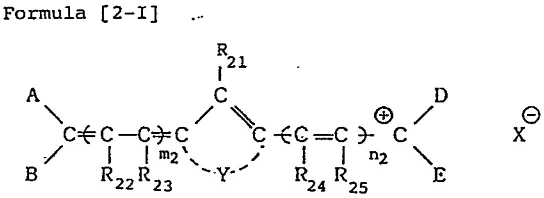

Formula [2-II]

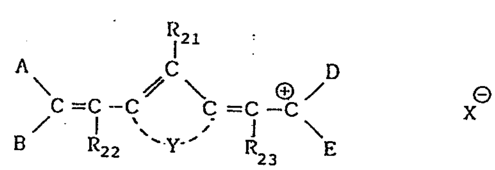

Formula [2-III]

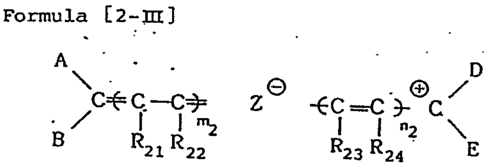

Formula [2-IV]

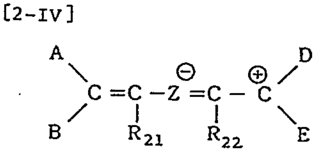

EP 0 264 274 A2

**Description**

Optical Recording Medium

BACKGROUND OF THE INVENTION

Field of the Invention

This invention relates to an optical recording medium, particularly to an optical recording medium improved in recording reproduction characteristic and storage stability which can be used for optical disc or optical card technique.

Related Background Art

Generally speaking, optical recording medium such as optical disc and optical card memory high density information by making optically detectable small (e.g. about 1 μ) pits formed on a thin recording layer provided on a substrate in the form of a spiral or circular and linear track. For writing information on such a disc, laser converged on the surface of a laser sensitive layer is scanned and only the surface irradiated with the laser beam forms pits, which pits are formed in the form of spiral or circular or linear track. The laser sensitive layer can absorb the laser energy to form optically detectable pits. For example, according to the heat mode recording system, the laser sensitive layer can absorb heat energy and form small concavities (pits) through evaporation or melting at that site. On the other hand, according to another heat mode recording system, by absorption of the irradiated laser energy, a pit having optically detectable density difference at that site can be formed.

As the optical recording medium to be used in this kind of optical recording and reproduction device, there have been known those constituted of a substrate, a metal reflective layer and a recording layer containing a dye. Such optical recording medium is formed so as to detect easily the reflected light by permitting the laser beam incident on the recording layer containing a dye to reach the metal reflective layer to be reflected thereagainst, and the above metal reflective layer in this case is provided for supplementing the amount of reflected light which is insufficient only with the recording layer.

When a dye with great light absorption for laser beam is used as the organic dye thin film, light absorption reflective film exhibiting metallic lustre (reflectance 10 to 50%) is obtained to give an optical recording medium capable of laser recording and reflective reading. Particularly, when a semiconductor laser of oscillation wavelength of 700 to 850 nm is used as the laser light source, there is the advantage that the device can be made compact and low cost.

However, because the organic dye thin film is generally susceptible to material change caused by heat and light, there have been involved the problem that recording reproduction characteristic and storage stability are lowered.

Also, since optical recording medium performs recording with strong laser power and further reproduction with weaker laser power by use of the same laser as in the recording method as described above, the threshold value to laser power is required to be distinct. However, for organic dye thin films, distinct threshold value as mentioned above can be obtained with difficulty, as compared with inorganic thin films, and tends to be deteriorated during reproduction.

For prevention of such deterioration of organic dye thin film, there has been proposed an invention in which a photostabilizer such as aminium compound or diimonium compound is added to the organic dye thin film (GB 2155811A).

SUMMARY OF THE INVENTION

An object of the present invention is to provide an optical recording medium which is improved particularly in stability of the organic dye thin film to heat and light, and also enhanced in stability for a long term and repeated reproduction characteristic, by addition of a light stabilizer.

Another object of the present invention is to provide an optical recording medium, having high sensitivity and C/N ratio (carrier/noise ratio) as well as excellent recording reproduction characteristic having a distinct threshold value to a laser power.

BRIEF DESCRIPTION OF THE DRAWING

Figs. 1 to 4 are a sectional view of each concrete example of the optical recording media of the present invention.

Fig. 5 and Fig. 6 are a graph showing C/N ratio on the vertical axis corresponding to variations of the recording laser power on the horizontal axis.

DESCRIPTION OF THE PREFERRED EMBODIMENTS

The optical recording medium of the present invention is accomplished by having an optical dye thin film containing a dye selected from polymethine dyes represented by the formulae [1-I] to [2-IV] shown below and a compound selected from aminium salt compounds and diimonium salt compounds in a recording layer.

Formula [1-I]

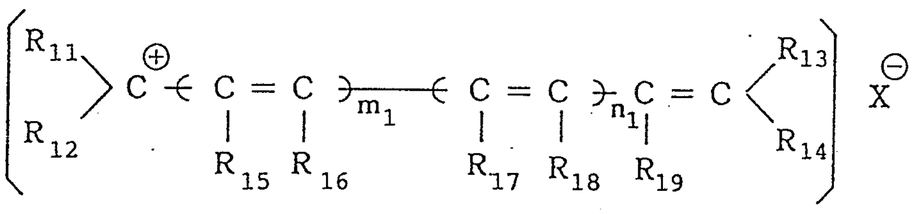

$R_{11}$, $R_{12}$, $R_{13}$, $R_{14}$, $R_{15}$, $R_{16}$, $R_{17}$, $R_{18}$ and $R_{19}$ may include hydrogen atom, halogen atom, alkyl group (e.g. methyl, ethyl, n-propyl, iso-propyl, n-butyl, sec-butyl, iso-butyl, t-butyl, n-amyl, t-amyl, n-hexyl, n-octyl, t-octyl, etc.), further other alkyl groups such as substituted alkyl group (e.g. 2-hydroxyethyl, 3-hydroxypropyl, 4-hydroxybutyl, 2-acetoxyethyl, carboxymethyl, 2-carboxyethyl, 3-carboxypropyl, 2-sulfoethyl, 3-sulfopropyl, 4-sulfobutyl, 3-sulfatepropyl, 4-sulfatebutyl, N-(methylsulfonyl)carbamylmethyl, 3-(acetylsulfamyl)propyl, 4-(acetylsulfamy)butyl, etc.), cyclic alkyl group (e.g. cyclohexyl, etc.), alkenyl group (vinyl, allyl, propenyl, butenyl, pentenyl, hexenyl, heptenyl, octenyl, dodecyl, prenyl, etc.), aralkyl group (e.g. benzyl, phenethyl, α-naphtylmethyl, β-naphthylmethyl, etc.), substituted aralkyl group (e.g. carboxybenzyl, sulfobenzyl, hydroxybenzyl, etc.). Further, R11, R12, R13, R14, $R_{15}$, $R_{16}$, $R_{17}$, $R_{18}$ and $R_{19}$ represent substituted or unsubstitute aryl group (e.g. phenyl, naphthyl, tolyl, xylyl, methoxyphenyl, dimethoxyphenyl, trimethoxyphenyl, ethoxyphenyl, dimethylaminophenyl, diethylaminophenyl, dipropylaminophenyl, di-n-butylaminophenyl, dibenzylaminophenyl, diphenylaminophenyl, etc.), substituted or unsubstituted heterocyclic group (e.g. pyridyl, quinolyl, lepidyl, methylpyridyl, furyl, thienyl, indolyl, pyrrole, carbazolyl, N-ethylcarbazolyl, etc.) or substituted or unsubstituted styryl group (e.g. styryl, methoxystyryl, dimethoxystyryl, trimethoxystyryl, ethoxystytyl, dimethylaminostyryl, diethylaminostyryl, dipropylaminostyryl, dibenzylaminostyryl, diphenylaminostyryl, 2,2-diphenylvinyl, 2-phenyl-2-methylvinyl, 2-(dimethylaminophenyl)-2-phenylvinyl, 2-(diethylaminophenyl)-2-phenylvinyl, 2-(dibenzylaminophenyl)-2-phenylvinyl, 2,2-di(diethylaminophenyl)vinyl, 2,2-di(methoxyphenyl)vinyl,2,2-di(ethoxyphenyl)vinyl, 2-(dimethylaminophenyl)-2-methylvinyl, 2-(diethylaminophenyl)-2-ethylvinyl, etc.). However, at least one of $R_{11}$, $R_{12}$, $R_{13}$ and $R_{14}$ is dialkylamino-substituted aryl group. Particularly, the case when at least one of R11 and R12 and at least one of R13 and $R_{14}$ are dialkylamino-substituted aryl groups are preferred. Also, the alkyl in the dialkylamino-substituted aryl group should preferably have 1 to 4 carbon atoms. $m_1$ is 0 or 1, $n_1$ is 0, 1 or 2, $X^{\ominus}$ represents anion such as chloride, bromide, iodide, perchlorate, nitrate, benzenesulfonate, p-toluenesulfonate, methylsulfate, ethylsulfate, propylsulfate, tetrafloroborate, tetraphenylborate, hexafluorophosphate, benzenesulfinate, acetate, trifluoroacetate, propionacetate, benzoate, oxalate, succinate, malonate, oleate, stearate, citrate, monohydrogen diphosphate, dihydrogen monophosphate, chlorosulfonate, pentachlorostannate, florosulfonate, trifloromethanesulfonate, hexafluoroarsenate, hexafluoroantimonate, molybdenate, tungstate, titanate, zirconate, etc.

Formula [2-I]

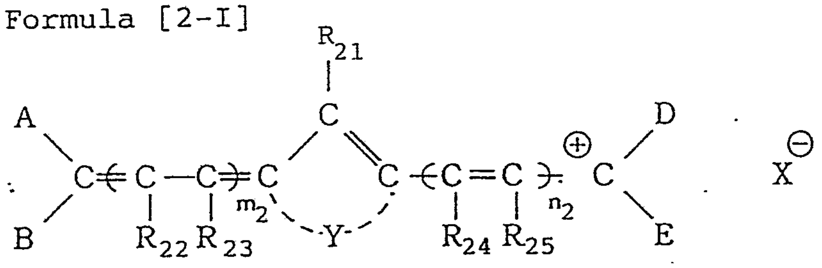

Formula [2-II]

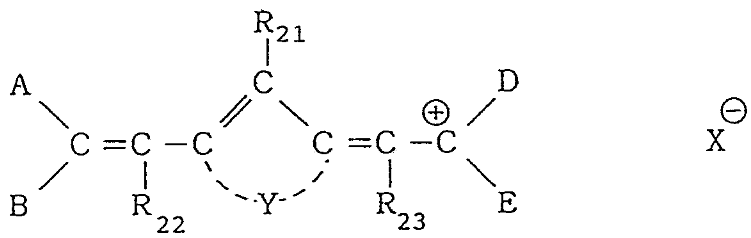

Formula [2-III]

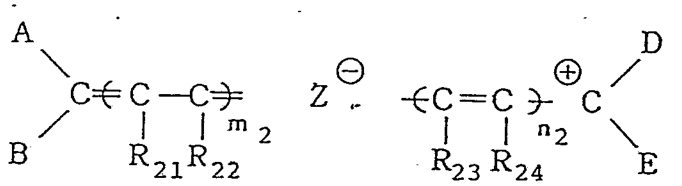

Formula [2-IV]

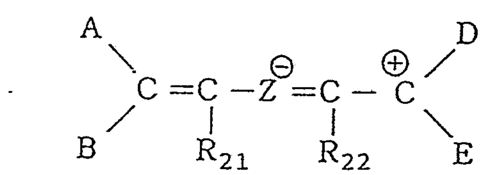

In the formulae, A, B, D, and E represent hydrogen atom, halogen atom, or alkyl group (e.g. methyl, ethyl, n-propyl, iso-propyl, n-butyl, secbutyl, iso-butyl, t-butyl, n-amyl, t-amyl, n-hexyl, n-octyl, t-octyl, etc.), further other alkyl groups such as substituted alkyl group (e.g. 2-hydroxyethyl, 3-hydroxypropyl, 4-hydroxybutyl, 2-acetoxyethyl, carboxymethyl, 2-carboxyethyl, 3-carboxypropyl, 2-sulfoethyl, 3-sulfopropyl, 4-sulfobutyl, 3-sulfatepropyl, 4-sulfatebutyl, N-(methylsulfonyl)carbamylmethyl, 3-(acetylsulfamyl)propyl, 4-(acetylsulfamyl)butyl, etc.), cyclic alkyl group (e.g. cyclohexyl, etc.), alkenyl group (vinyl, allyl, propenyl, butenyl, pentenyl, hexenyl, heptenyl, octenyl, dodecynyl, prenyl, etc.), aralkyl group (e.g. benzyl, phnethyl, α-naphtylmethyl, β-naphthylmethyl, etc., substituted aralkyl group (e.g. carboxybenzyl, sulfobenzyl, hydroxybenzyl, etc.). Further, A, B, D and E represent substituted or unsubstituted aryl group (e.g. phenyl, naphthyl, tolyl, xylyl, methoxyphenyl, dimethoxyphenyl, trimethoxyphenyl, ethoxyphenyl, dimethylaminophenyl, diethylaminophenyl, dipropylaminophenyl, di-n-butylaminophenyl, dibenzylaminophenyl, diphenylaminophenyl, etc.), substituted or unsubstituted heterocyclic group (e.g. pyridyl, quinolyl, lepidyl, methylpyridyl, furyl, thienyl, indolyl, pyrrole, carbazolyl, N-ethylcarbazolyl, etc.) or substituted or unsubstituted styryl group (e.g. styryl, methoxystyryl, dimethoxystyryl, trimethoxystyryl, ethoxystytyl, dimethylaminostyryl, diethylaminostyryl, dipropylaminostyryl, dibenzylaminostyryl, diphenylaminostyryl, 2,2-diphenylvinyl, 2-phenyl-2-methylvinyl, 2-(dimethylaminophenyl)-2-phenylvinyl, 2-(diethylaminophenyl)-2-phenylvinyl, 2-(dibenzylaminophenyl)-2-phenylvinyl, 2,2-di(diethylaminophenyl)vinyl,2,2-di(methoxyphenyl)vinyl, 2,2-di(ethoxyphenyl)vinyl, 2-(dimethylaminophenyl)-2-methylvinyl, 2-(diethylaminophenyl)-2-ethylvinyl, etc. However, at least one of A, B, D and E is dialkylamino-substituted aryl group. Particularly, the case when at least one of A and B and at least one of D and E are dialkylamino-substituted aryl groups are preferred.

Also, the alkyl in the dialkylamino-substituted aryl group should preferably have 1 to 4 carbon atoms.

$R_{21}$, $R_{22}$, $R_{23}$, $R_{24}$ and $R_{25}$ may include hydrogen atom, halogen atom, alkyl group (e.g. methyl, ethyl, n-propyl, iso-propyl, n-butyl, sec-butyl, iso-butyl, t-butyl, n-amyl-, t-amyl, n-hexyl, n-octyl,t- octyl, etc.), further other alkyl groups such as substituted alkyl group (e.g. 2-hydroxyethyl, 3-hydroxypropyl, 4-hydroxybutyl, 2-acetoxyethyl, carboxymethyl, 2-carboxyethyl, 3-carboxypropyl, 2-sulfoethyl, 3-sulfopropyl, 4-sulfobutyl, 3-sulfatepropyl, 4-sulfatebutyl, N-(methylsulfonyl)carbamylmethyl, 3-(acetylsulfamyl)propyl, 4-(acetylsulfamyl)butyl, etc.), cyclic alkyl group (e.g. cyclohexyl, etc.), alkenyl group (vinyl, allyl, propenyl, butenyl, pentenyl, hexenyl, heptenyl, octenyl, dodecynyl, prenyl, etc.), aralkyl group (e.g. benzyl, phenethyl, α-naphtylmethyl, β-naphthylmethyl, etc.), substituted aralkyl group (e.g. carboxybenzyl, sulfobenzyl, hydroxybenzyl, etc.). $m_2$ and $n_2$ are each 0, 1 or 2.

Y represents a divalent hydrocarbon group for forming a substituted or unsubstituted 5-membered or 6-membered ring (e.g. $-CH_2-CH_2-$, $-(CH_2)_3-$,

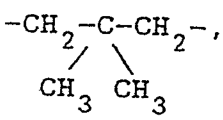

$-CH=CH-$, $-CH_2-CHCl-CH_2-$, etc.) and these 5-membered or 6-membered rings may be fused with benzene ring, naphthalene ring, etc.

$Z^{\ominus}$ represents

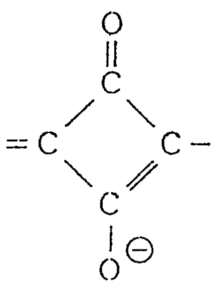

or

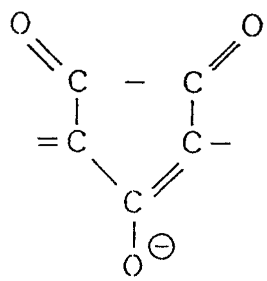

.

$X^{\ominus}$ may include the same as mentioned above.

In the combination of the polymethine compound (D) with the aminium salt (A) or the diimonium salt (I), when comparison is made between the group of polymethine compounds having dialkyl-substituted amino group at the terminal aryl group of the polymethine chain (DS group) and the group of polymethine compounds having no dialkyl-substituted amino group in all the aryl groups at both terminal aryl groups of the polymethine chain (DN group), difference in resistance to light stability can be shown.

The DS group having dialkyl-substituted amino group has been found to be higher in light stability resistance, particularly smaller in lowering of reflectance, than the DN group having hydrogen atom, halogen, alkoxy group, etc. as the substituent on the terminal aryl group. This may be considered to be due to similarity in structure to the polymethine compound, because the aminium salt or the diimonium salt is a p-phenylenediamine (or 4,4′-diaminodiphenyl) substituted with an aryl group having dialkyl-substituted amino group. The polymethine compound of the present invention may be considered to have the cationic center non-localized, including the polymethine chain and the aryl group conjugated therewith. Also, the aminium salt or the diimonium salt of the present invention is one-electron oxidized product or two-electron oxidized product, both being cationic species, and the cationic center is considered to be non-localized.

Particularly, when the DS group is compared with the DN group, DS group has dialkyl-substituted amino group on the aryl group, having many similarities in structure to the aminium salt or the diimonium salt of the present invention. On the other hand, because the DN group has no dialkyl-substituted amino group on the aryl group, it has little similarity in structure to the aminium salt or the diimonium salt.

Generally speaking, compounds with similar structures are well compatible and strong in interaction with each other, as important features in chemical properties. This has been said to be due to co-operative actions in orientation, compatibility, reactivity through the spacial interaction and the electronic interaction mutually between the compounds similar to each other. Perhaps, in the case of the present invention, the polymethine compound may be considered to interact strongly with the aminium salt or the diimonium salt through the above two actions and, in the optical recording layer comprising the polymethine compound and the aminium salt or the diimonium salt, the aminium salt or the diimonium salt may be estimated to act effectively on the excited species of the polymethine compound formed by absorption of light. This is because the aminium salt

or the diimonium salt is considered to extinguish the excited species through the spacial and/or electronic interaction concerning consumption of excessive energy possessed by the excited species.

In the following, representative examples of the polymethine compounds represented by the above formula [1-I] are enumerated.

Compound No. Example of Compound

D-1

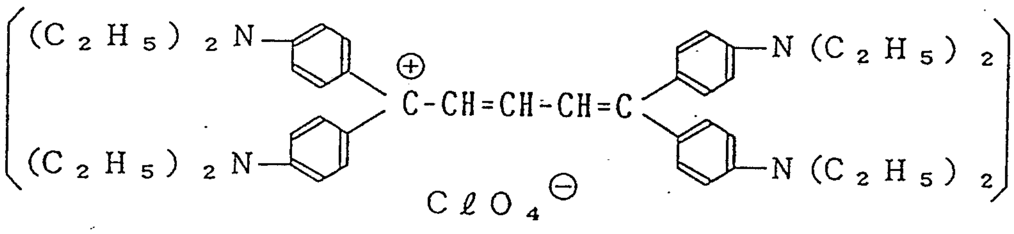

D-2

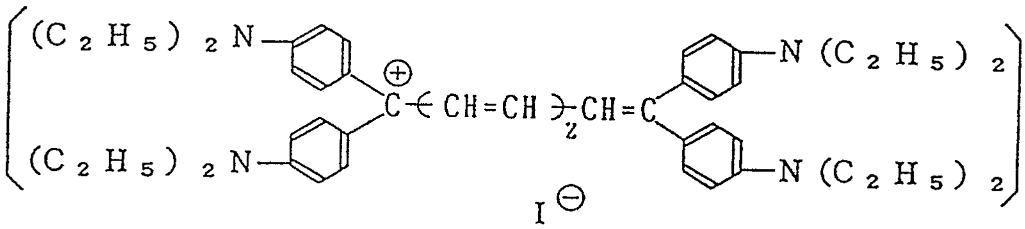

D-3

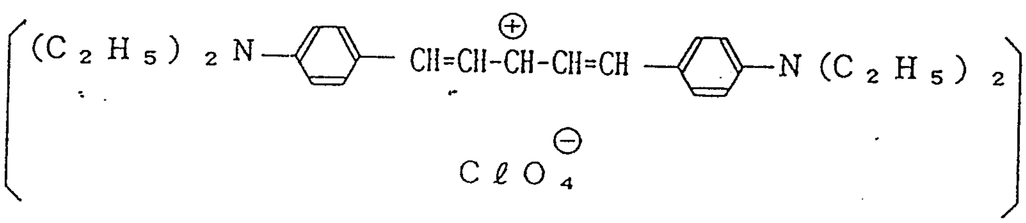

D-4

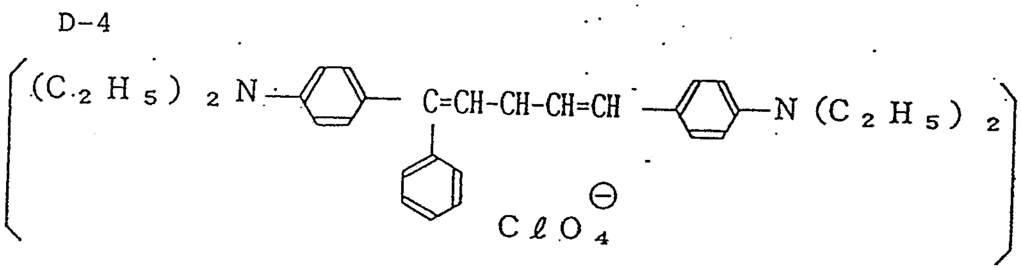

D-5

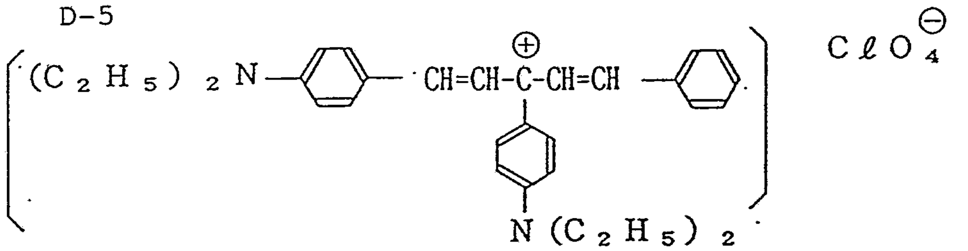

D-6

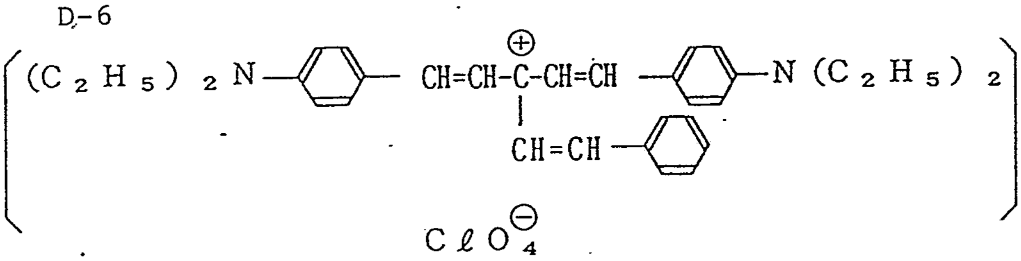

D-7

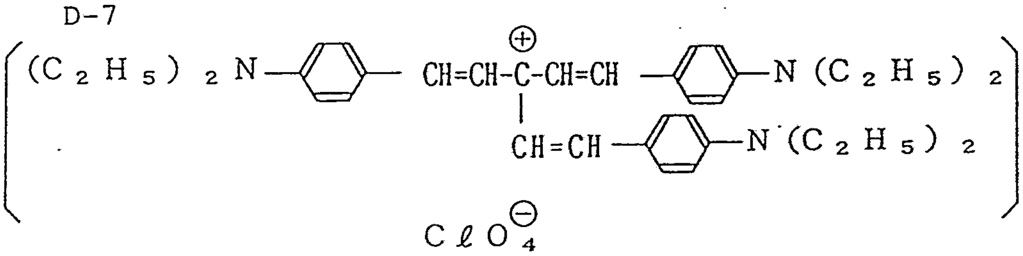

D-8

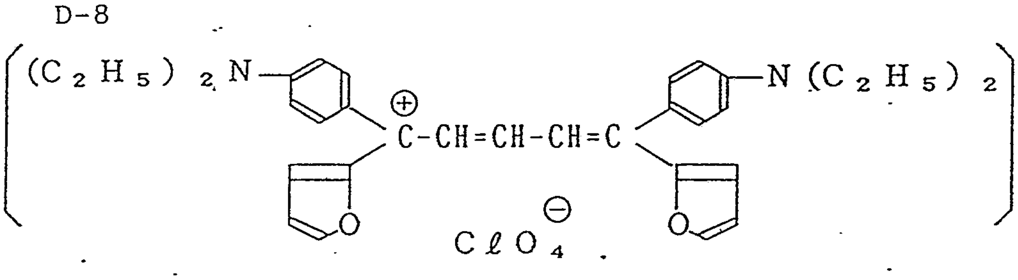

D-9

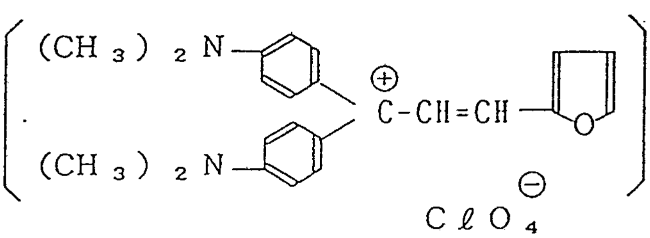

D-10

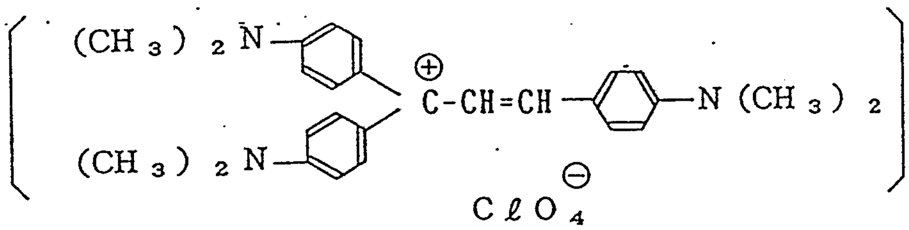

D-11

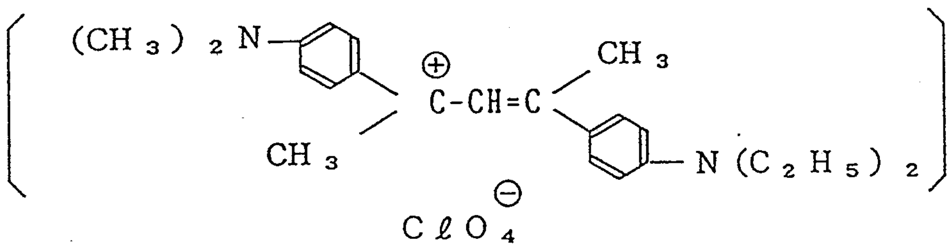

D-12

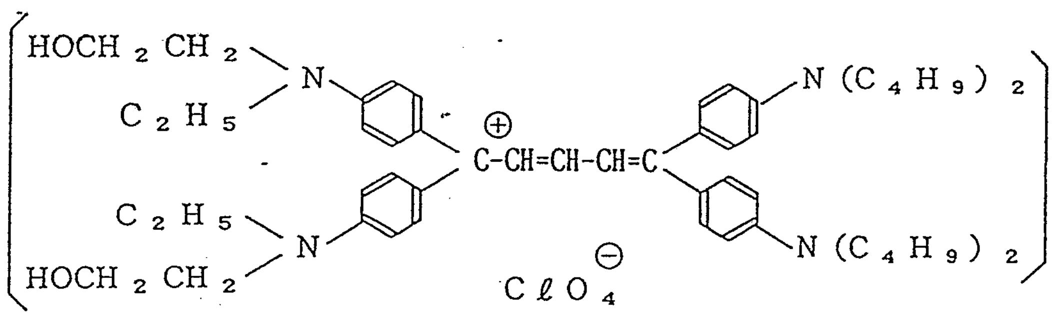

D-13

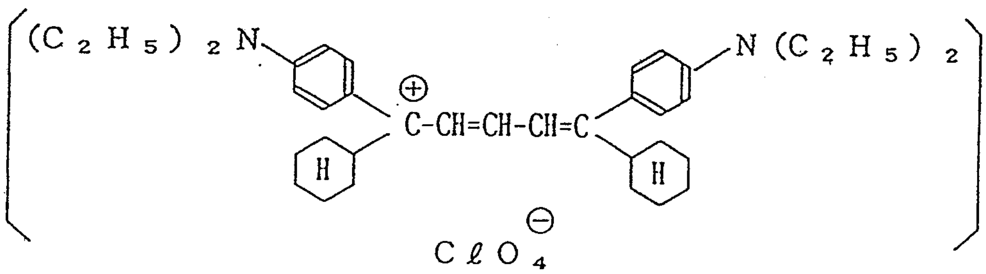

D-14

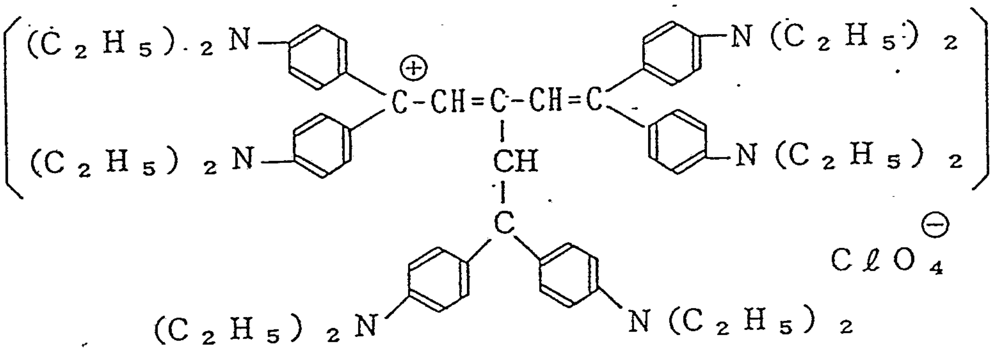

D-15

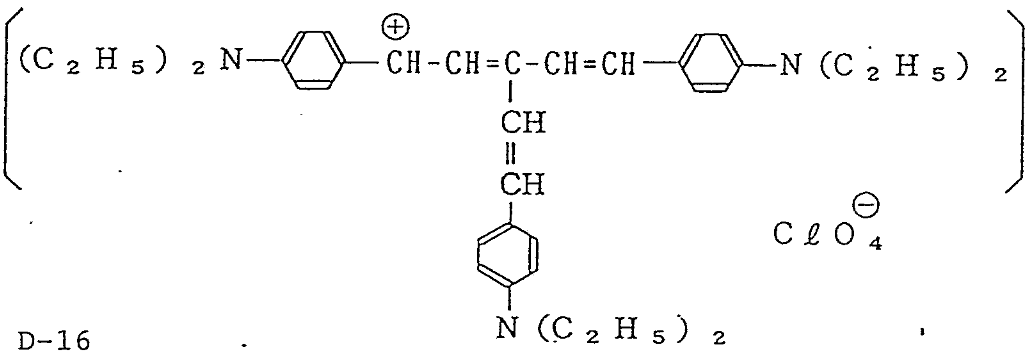

D-16

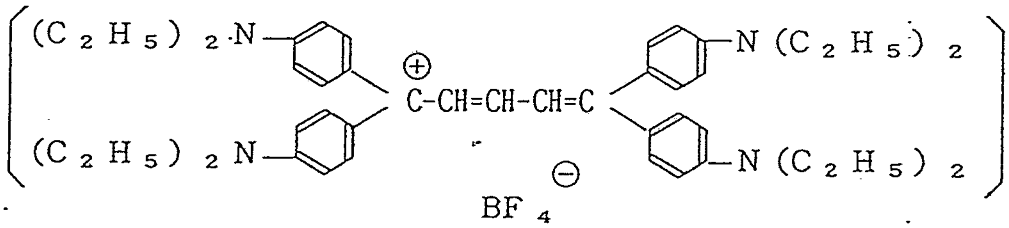

D-17

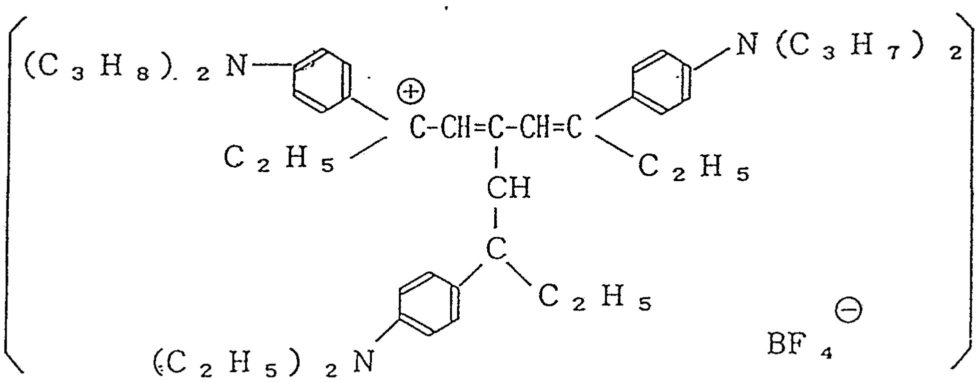

D-18

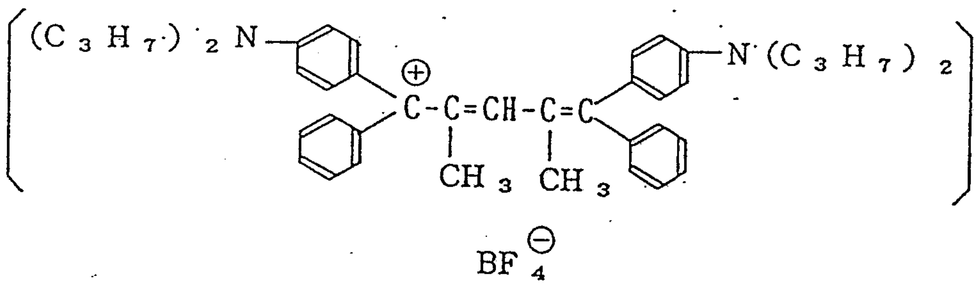

D-19

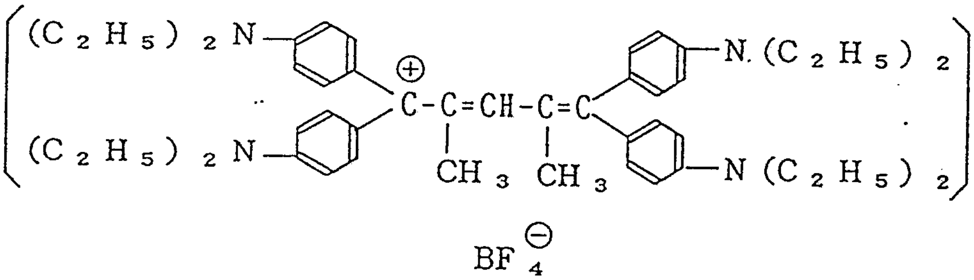

D-20

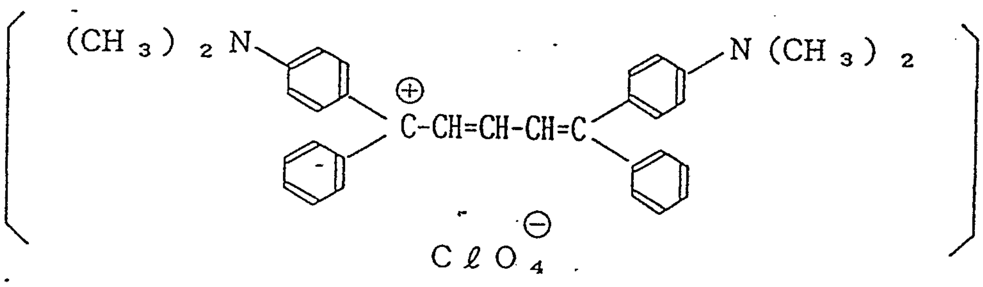

D-21

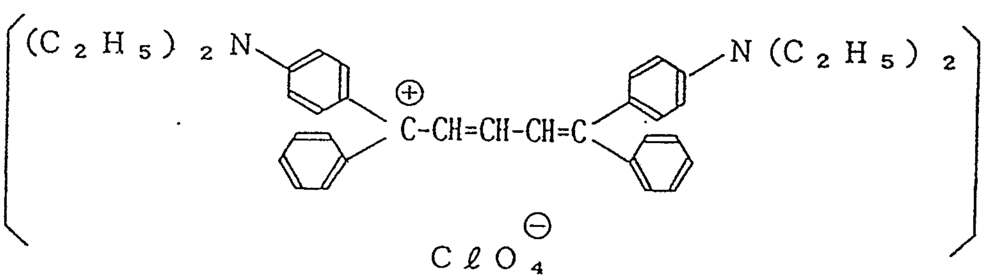

D-22

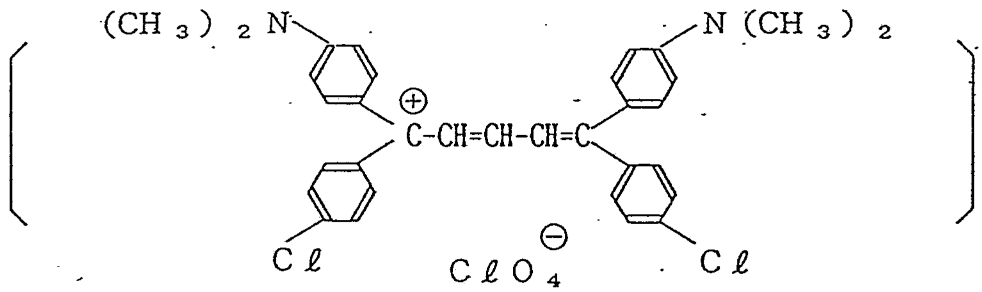

D-23

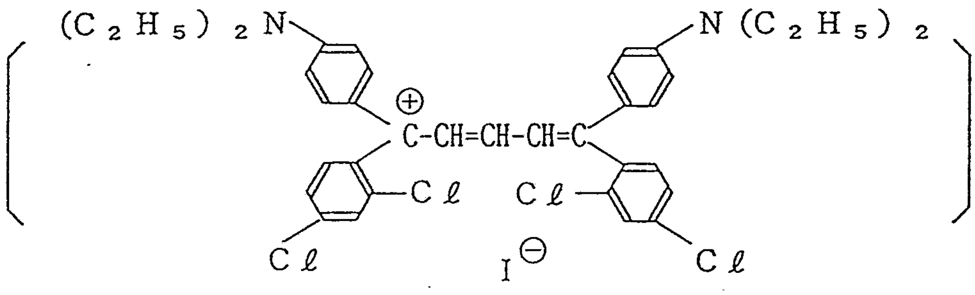

D-24

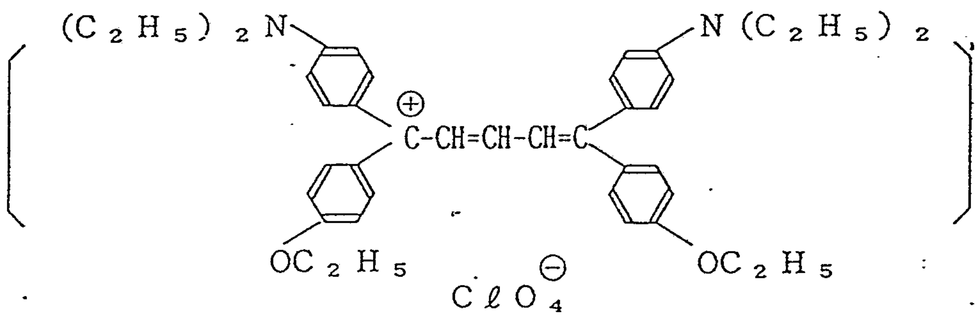

D-25

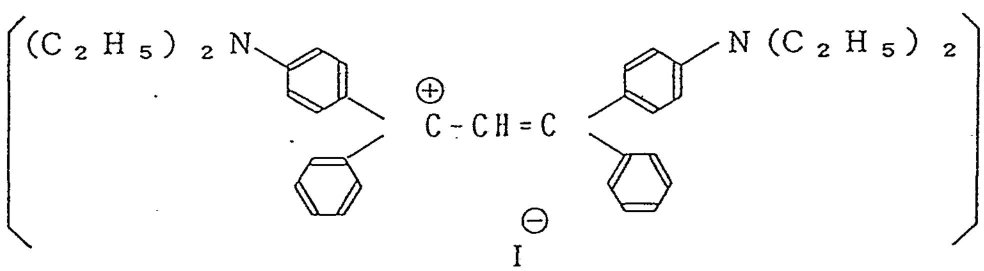

D-26

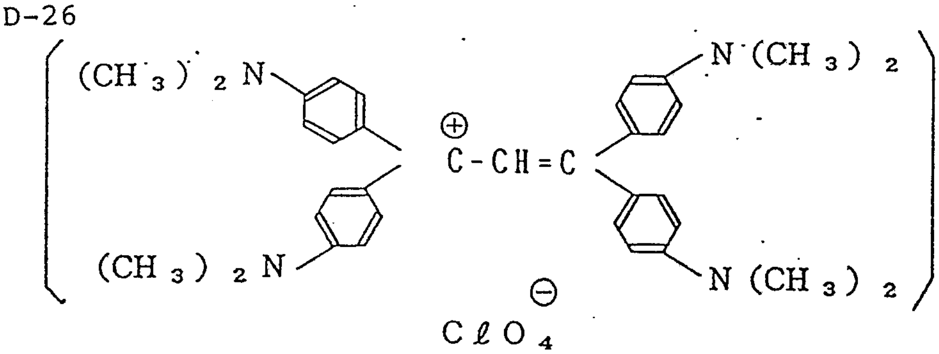

Next, representative examples of cyclic polymethine compounds (D) represented by the the above formulae [2-I], [2-II], [2-III] and [2-IV] are enumerated.

In these compound examples, 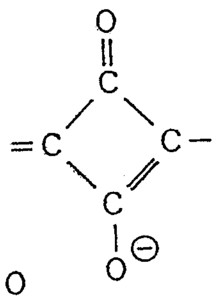

is represented by $Z_1$ and 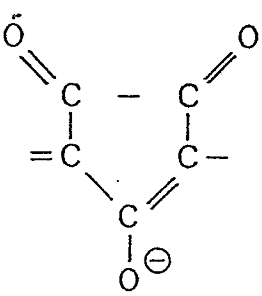 by $Z_2$.

And ⟵ means the same substituent as that on the left.

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-27 | 2-I | 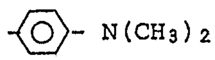 | ← | ← | ← | H | – | – | – | – | 0 | 0 | $-(CH_2)_3-$ | – | $ClO_4$ |
| D-28 | 2-I | 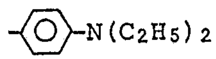 | ← | ← | ← | Cl | – | – | – | – | 0 | 0 | $-(CH_2)_2-$ | – | $ClO_4$ |
| D-29 | 2-I | 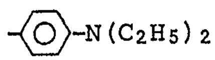 | ← | H | ← | H | – | – | – | – | 0 | 0 | $-(CH_2)_2-$ | – | $ClO_4$ |
| D-30 | 2-I | 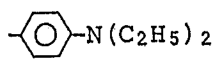 | ← | ← | ← | H | – | – | – | – | 0 | 0 | 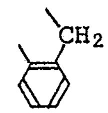 | – | $BF_4$ |
| D-31 | 2-I | 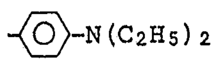 | ← | 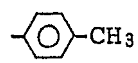 | ← | Cl | – | – | – | – | 0 | 0 | $-(CH_2)_3-$ | – | $ClO_4$ |
| D-32 | 2-I | 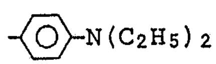 | ← | 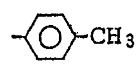 | ← | H | – | – | – | – | 0 | 0 | $-(CH_2)_3-$ | – | $BF_4$ |
| D-33 | 2-I | 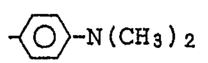 | ← | 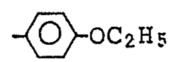 | ← | H | – | – | – | – | 0 | 0 | $-(CH_2)_2-$ | – | $ClO_4$ |

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-34 | 2-I | 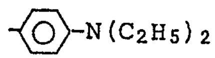 | ← | 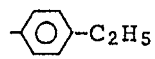 | ← | H | – | – | – | – | 0 | 0 | $-(CH_2)_2-$ | – | $ClO_4$ |
| D-35 | 2-I | 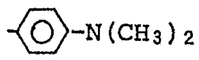 | ← | $-CH_3$ | ← | Cl | H | ← | ← | ← | 1 | 1 | $-(CH_2)_2-$ | – | $ClO_4$ |
| D-36 | 2-I | 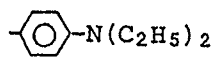 | ← | $-CH_3$ | ← | H | ← | – | H | – | 1 | 0 | $-(CH_2)_2-$ | – | 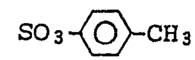 |
| D-37 | 2-I | 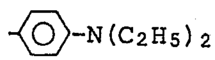 | ← | $-CH_3$ | ← | Cl | ← | – | H | – | 1 | 0 | $-(CH_2)_2-$ | – | $ClO_4$ |
| D-38 | 2-I | 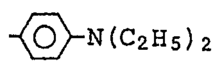 | ← | ← | ← | H | – | – | – | – | 0 | 0 | 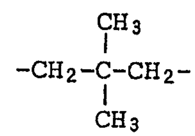 | – | $ClO_4$ |
| D-39 | 2-I | 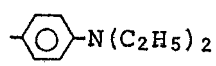 | ← | ← | ← | $CH_3$ | – | – | – | – | 0 | 0 | $-(CH_2)_2-$ | – | $ClO_4$ |
| D-40 | 2-I | 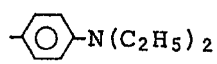 | ← | ← | ← | H | ← | – | H | – | 2 | 0 | $-(CH_2)_2-$ | – | $ClO_4$ |

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-41 | 2-I | 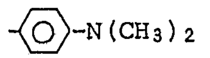 | ← | 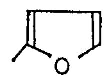 | ← | H | – | – | – | – | 0 | 0 | $-(CH_2)_3-$ | – | $ClO_4$ |
| D-42 | 2-I | 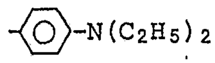 | ← | ← | ← | $CH_3$ | H | – | H | – | 2 | 0 | $-(CH_2)_2-$ | – | $ClO_4$ |
| D-43 | 2-II | 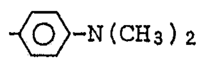 | ← | ← | ← | Cl | H | – | H | – | – | – | $-(CH_2)_3-$ | – | $ClO_4$ |
| D-44 | 2-II | 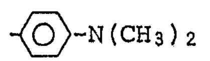 | ← | ← | ← | H | $CH_3$ | – | $CH_3$ | – | – | – | 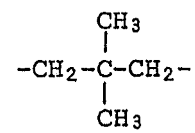 | – | $ClO_4$ |
| D-45 | 2-II | 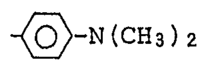 | ← | ← | ← | H | ← | – | H | – | – | – | 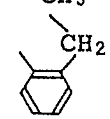 | – | I |
| D-46 | 2-II | 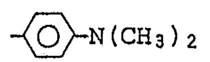 | ← | 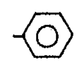 | ← | Cl | H | – | H | – | – | – | $-(CH_2)_3-$ | – | $BF_4$ |
| D-47 | 2-II | 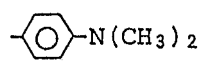 | ← | 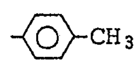 | ← | H | $CH_3$ | – | $CH_3$ | – | – | – | $-(CH_2)_2-$ | – | 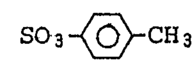 |
| D-48 | 2-II | 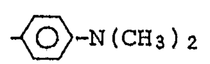 | ← | 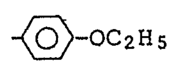 | ← | Cl | H | – | H | – | – | – | $-(CH_2)_3-$ | – | $ClO_4$ |

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-49 | 2-II | 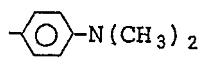 | ← | 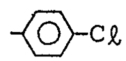 | ← | H | Cℓ | – | Cℓ | – | – | – | 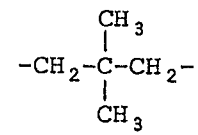 | – | $C\ell O_4$ |
| D-50 | 2-II | 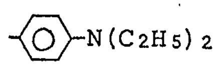 | ← | ← | ← | H | H | – | H | – | – | – | 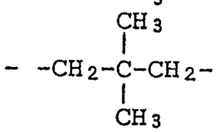 | – | $C\ell O_4$ |
| D-51 | 2-II | 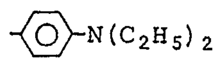 | ← | ← | ← | Cℓ | H | – | H | – | – | – | $-(CH_2)_3-$ | – | $C\ell O_4$ |
| D-52 | 2-II | 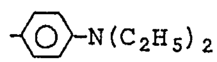 | ← | H | ← | Br | H | – | H | – | – | – | $-(CH_2)_2-$ | – | I |
| D-53 | 2-II | 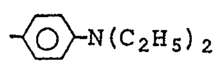 | ← | 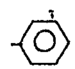 | ← | Cℓ | Cℓ | – | Cℓ | – | – | – | 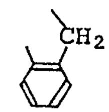 | – | $BF_4$ |
| D-54 | 2-II | 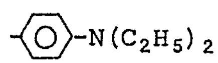 | ← | 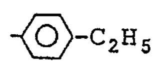 | ← | H | H | – | H | – | – | – | $-(CH_2)_3-$ | – | $C\ell O_4$ |
| D-55 | 2-II | 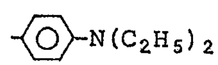 | ← | 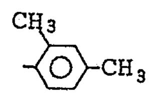 | ← | Br | Br | – | Br | – | – | – | $-(CH_2)_2-$ | – | 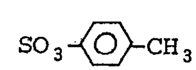 |
| D-56 | 2-II | 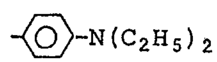 | ← | 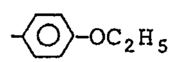 | ← | H | H | – | H | – | – | – | 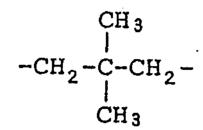 | – | $C\ell O_4$ |
| D-57 | 2-II | 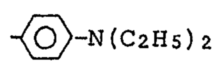 | ← | 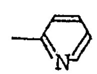 | ← | Br | $CH_3$ | – | $CH_3$ | – | – | – | $-(CH_2)_2-$ | – | 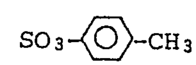 |
| D-58 | 2-II | 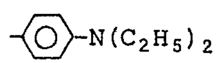 | ← | $CH_3$ | ← | H | H | – | H | – | – | – | 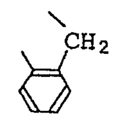 | – | $BF_4$ |

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-59 | 2-II | 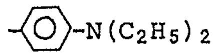 | ← | 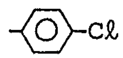 | ← | Cl | H | – | H | – | – | – | $-(CH_2)_2-$ | – | $ClO_4$ |
| D-60 | 2-II | 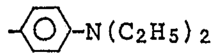 | ← | 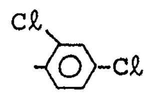 | ← | H | H | – | H | – | – | – | $-CH_2-C(CH_3)(CH_3)-CH_2-$ | – | $ClO_4$ |
| D-61 | 2-II | 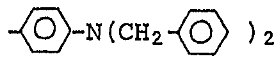 | ← | 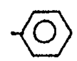 | ← | Cl | H | – | H | – | – | – | $-(CH_2)_2-$ | – | I |
| D-62 | 2-II | 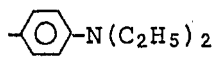 | ← | ← | 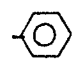 | Br | Br | – | Br | – | – | – | $-(CH_2)_3-$ | – | I |
| D-63 | 2-II | 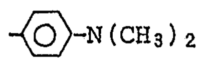 | 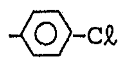 | 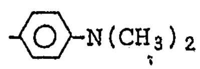 | 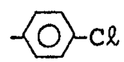 | Cl | H | – | H | – | – | – | $-CH_2-C(CH_3)(CH_3)-CH_2-$ | – | $BF_4$ |
| D-64 | 2-III | 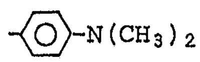 | ← | ← | ← | – | – | – | – | – | 0 | 0 | – | $Z_1$ | – |
| D-65 | 2-III | 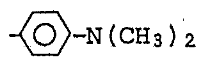 | ← | ← | ← | H | ← | ← | ← | – | 1 | 1 | – | $Z_1$ | – |
| D-66 | 2-III | 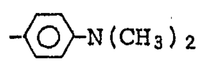 | ← | ← | ← | H | $CH_3$ | H | $CH_3$ | – | 2 | 2 | – | $Z_2$ | – |
| D-67 | 2-III | 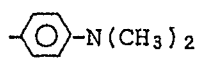 | ← | 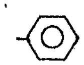 | ← | – | – | – | – | – | 0 | 0 | – | $Z_1$ | – |

| Compound No. | Formula No. | A | D | B | E | $R_{21}$ | $R_{22}$ | $R_{24}$ | $R_{23}$ | $R_{25}$ | m | n | Y | Z | X |
|---|---|---|---|---|---|---|---|---|---|---|---|---|---|---|---|
| D-68 | 2-III | 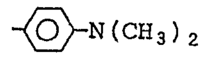 | ← | 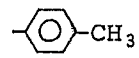 | ← | H | ← | ← | ← | – | 1 | 1 | – | $Z_2$ | – |
| D-69 | 2-III | 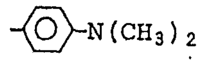 | ← | 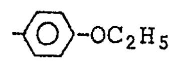 | ← | – | – | – | – | – | 0 | 0 | – | $Z_2$ | – |
| D-70 | 2-III | 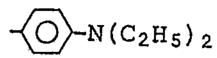 | ← | ← | ← | – | – | – | – | – | 0 | 0 | – | $Z_1$ | – |
| D-71 | 2-III | 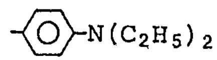 | ← | ← | ← | H | ← | ← | ← | – | 1 | 1 | – | $Z_2$ | – |
| D-72 | 2-III | 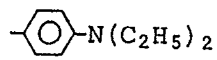 | ← | 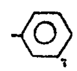 | ← | H | ← | ← | ← | – | 1 | 1 | – | $Z_1$ | – |
| D-73 | 2-III | 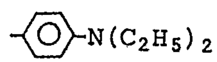 | ← | 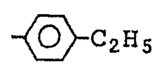 | ← | – | – | – | – | – | 0 | 0 | – | $Z_2$ | – |
| D-74 | 2-III | 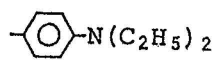 | ← | 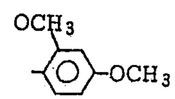 | ← | – | – | – | – | – | 0 | 0 | – | $Z_2$ | – |
| D-75 | 2-III | 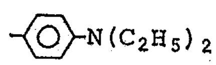 | ← | $CH_3$ | ← | H | Cl | H | Cl | – | 1 | 1 | – | $Z_1$ | – |
| D-76 | 2-III | 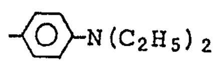 | ← | 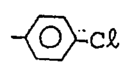 | ← | – | – | – | – | – | 0 | 0 | – | $Z_1$ | – |
| D-77 | 2-III | 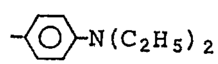 | ← | 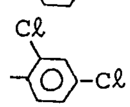 | ← | H | ← | ← | ← | – | 1 | 1 | – | $Z_2$ | – |

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-78 | 2-III | 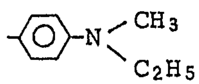 | ← | 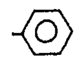 | ← | H | ← | ← | ← | – | 1 | 1 | – | $Z_2$ | – |
| D-79 | 2-III | 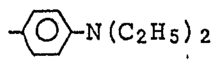 | ← | ← | 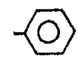 | – | – | – | – | – | 0 | 0 | – | $Z_1$ | – |
| D-80 | 2-III | 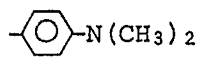 | ← | 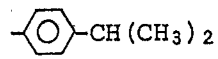 | ← | – | – | – | – | – | 0 | 0 | – | $Z_1$ | – |
| D-81 | 2-III | 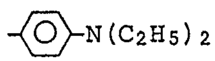 | ← | 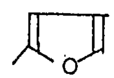 | ← | – | – | – | – | – | 0 | 0 | – | $Z_1$ | – |
| D-82 | 2-III | 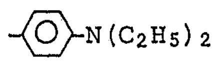 | ← | 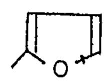 | ← | H | ← | ← | ← | – | 1 | 1 | – | $Z_1$ | – |
| D-83 | 2-IV | 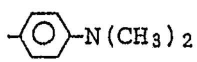 | ← | ← | ← | H | ← | – | – | – | 0 | 0 | – | $Z_1$ | – |
| D-84 | 2-IV | 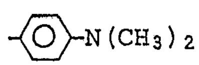 | ← | ← | ← | H | ← | – | – | – | 0 | 0 | – | $Z_1$ | – |
| D-85 | 2-IV | 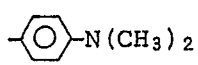 | ← | ← | ← | $CH_3$ | ← | – | – | – | 0 | 0 | – | $Z_2$ | – |

| Compound No. | Formula No. | A | D | B | E | $R_{21}$ | $R_{22}$ | $R_{24}$ | $R_{23}$ | $R_{25}$ | $m_2$ | $n_2$ | Y | Z | X |
|---|---|---|---|---|---|---|---|---|---|---|---|---|---|---|---|
| D-86 | 2-IV | 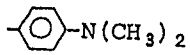 | ← | ← | ← | H | ← | – | – | – | – | – | – | $Z_1$ | – |
| D-87 | 2-IV | 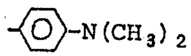 | ← | 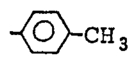 | ← | H | ← | – | – | – | – | – | – | $Z_2$ | – |
| D-88 | 2-IV | 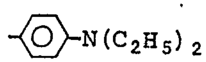 | ← | 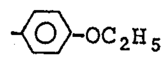 | ← | H | ← | – | – | – | – | – | – | $Z_2$ | – |
| D-89 | 2-IV | 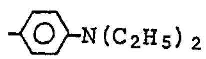 | ← | ← | ← | H | ← | – | – | – | – | – | – | $Z_1$ | – |
| D-90 | 2-IV | 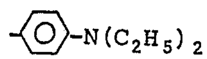 | ← | ← | ← | H | ← | – | – | – | – | – | – | $Z_2$ | – |
| D-91 | 2-IV | 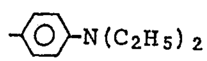 | ← | 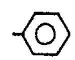 | ← | H | ← | – | – | – | – | – | – | $Z_1$ | – |
| D-92 | 2-IV | 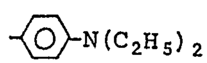 | ← | 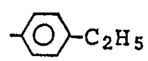 | ← | $CH_3$ | ← | – | – | – | – | – | – | $Z_2$ | – |
| D-93 | 2-IV | 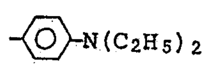 | ← | 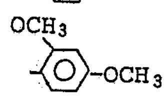 | ← | ← | ← | – | – | – | – | – | – | $Z_2$ | – |
| D-94 | 2-IV | 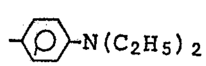 | ← | $CH_3$ | ← | H | Cℓ | – | – | – | – | – | – | $Z_1$ | – |
| D-95 | 2-IV | 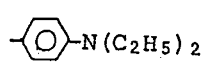 | ← | 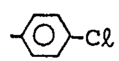 | ← | $C_2H_5$ | ← | – | – | – | – | – | – | $Z_1$ | – |
| D-96 | 2-IV | 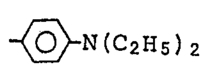 | ← | 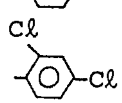 | ← | H | ← | – | – | – | – | – | – | $Z_2$ | – |

These polymethine compounds can be obtained easily by synthesis according to the synthetic methods disclosed in Bernard S. wildi et al, J. Am. Chem. Soc. (Journal of American Chemical Society) 80, 3772 - 3777

(1959), H. Schmidt et al, Ann. (Liebig Annalen der Chemie) 623, 204 - 216 or R. Wlzinger et al, Helv. Chm, Acta (Helvetica Chica Acta) 24, 369, etc.

Such dyes have absorption peaks with great absorption coefficients in the near infrared region, have also good solubility in organic solvents and can give good characteristics as optical recording medium. Further, it has been found that recording reproduction characteristic and storage stability can be improved by incorporation of an aminium salt compound or a diimonium salt compound in the cyclic polymethine compound as described above.

The aminium salt compound and the diimonium salt compound to be used in the present invention are represented by the formula [3] and the formula [4] shown below, respectively.

Formula [3]

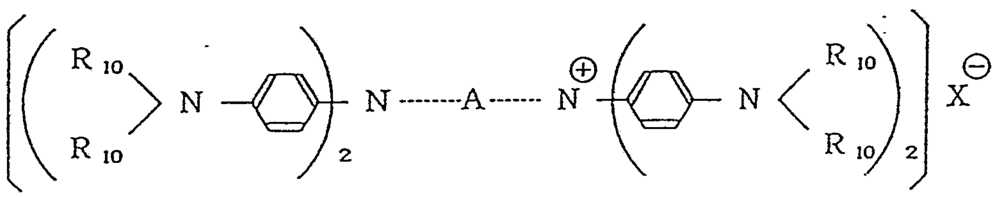

Formula [4]

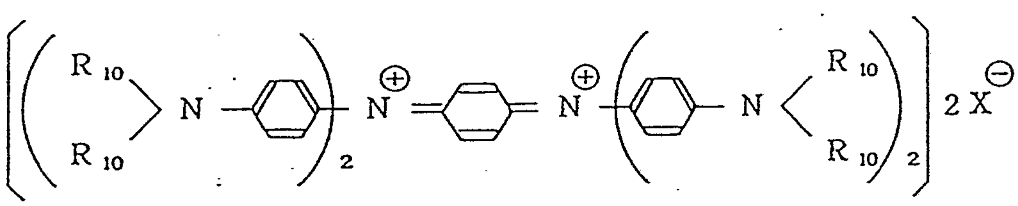

The groups represented by $R_{10}$ may be either the same or different and may include hydrogen atom or alkyl group (e.g. methyl, ethyl, n-propyl, iso-propyl, n-butyl, sec-butyl, iso-butyl, t-butyl, n-amyl, t-amyl, n-hexyl, n-octyl, t-octyl, alkyl having C9-C12, etc.), further other alkyl groups such as substituted alkyl group (e.g. 2-hydroxyethyl, 3-hydroxypropyl, 4-hydroxybutyl, 2-acetoxyethyl, carboxymethyl, 2-carboxyethyl, 3-carboxypropyl, 2-sulfoethyl, 3-sulfopropyl, 4-sulfobutyl, 3-sulfatepropyl, 4-sulfatebutyl, N-(methylsulfonyl)carbamylmethyl, 3-(acetylsulfamyl)propyl, 4-(acetylsulfamyl)butyl, etc.), cyclic alkyl group (e.g. cyclohexy, etc.), alkenyl group (vinyl, allyl, propenyl, butenyl, pentenyl, hexenyl, heptenyl, octenyl, dodecynyl, prenyl, etc.), aralkyl group (e.g. benzyl, phnethyl, α-naphtylmethyl, β-naphthylmethyl, etc.), substituted aralkyl group (e.g. carboxybenzyl, sulfobenzyl, hydroxybenzyl, etc.). A represents

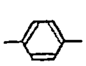 or 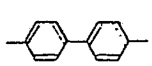

$X^{\ominus}$ represents an anion, which can be represented by the anion as in the above formula [1-I].

These aminium salt compounds and diimonium salt compounds can be synthesized according to the synthetic methods as disclosed in Japanese Patent Publication No. 25335/1968.

Next, representative examples of the aminium salt compounds (A) represented by the above formula [3] are set forth.

| Compound No. | A | $R_{10}$ | $X^{\ominus}$ |
|---|---|---|---|
| A −1 | 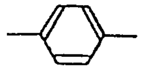 | $CH_3$ | $AsF_6^{\ominus}$ |
| A −2 | 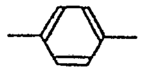 | $CH_3$ | $C\ell O_4^{\ominus}$ |
| A −3 | 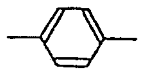 | $CH_3$ | $SbF_6^{\ominus}$ |
| A −4 | 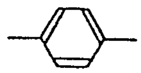 | $C_2H_5$ | $AsF_6^{\ominus}$ |
| A −5 | 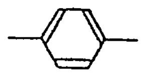 | $C_2H_5$ | $C\ell O_4^{\ominus}$ |
| A −6 | 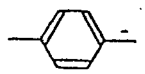 | $C_2H_5$ | $BF_4^{\ominus}$ |
| A −7 | 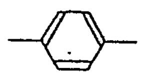 | n−$C_3H_7$ | $AsF_6^{\ominus}$ |
| A −8 | 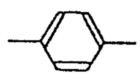 | iso−$C_3H_7$ | $C\ell O_4^{\ominus}$ |
| A −9 | 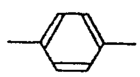 | n−$C_4H_9$ | $C\ell O_4^{\ominus}$ |
| A −10 | 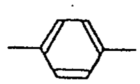 | n−$C_4H_9$ | $AsF_6^{\ominus}$ |

| Compound No. | A | $R_{10}$ | $X^{\ominus}$ |
|---|---|---|---|
| A −11 | 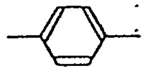 | $n-C_4H_9$ | $SbF_6^{\ominus}$ |
| A −12 | 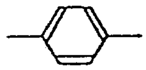 | $n-C_4H_9$ | $BF_4^{\ominus}$ |
| A −13 | 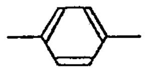 | $n-C_4H_9$ | $I^{\ominus}$ |
| A −14 | 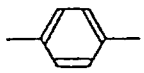 | $n-C_4H_9$ | $CH_3$ 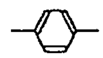 $SO_3^{\ominus}$ |
| A −15 | 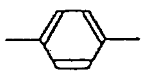 | $t-C_4H_9$ | $C\ell O_4^{\ominus}$ |
| A −16 | 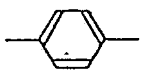 | $t-C_4H_9$ | $AsF_6^{\ominus}$ |
| A −17 | 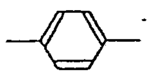 | $n-C_6H_{13}$ | $C\ell O_4^{\ominus}$ |
| A −18 | 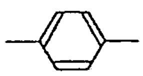 | $n-C_8H_{17}$ | $AsF_6^{\ominus}$ |
| A −19 | 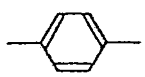 | $n-C_{12}H_{25}$ | $SbF_6^{\ominus}$ |
| A −20 | 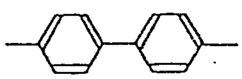 | $CH_3$ | $AsF_6^{\ominus}$ |
| A −21 | 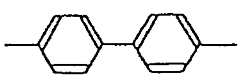 | $C_2H_5$ | $C\ell O_4^{\ominus}$ |

| Compound No. | A | $R_{10}$ | $X^{\ominus}$ |
|---|---|---|---|
| A −22 | 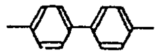 | $C_2H_5$ | $AsF_6^{\ominus}$ |
| A −23 | 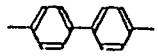 | $C_2H_5$ | $SbF_6^{\ominus}$ |
| A −24 | 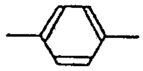 | $C_2H_4OH$ | $SbF_6^{\ominus}$ |
| A −25 | 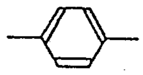 | $C_2H_4OH$ | $C\ell O_4^{\ominus}$ |
| A −26 | 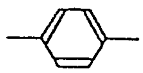 | $C_2H_4OH$ | $NO_3^{\ominus}$ |
| A −27 | 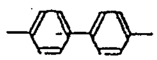 | $C_2H_4OH$ | $SbF_6^{\ominus}$ |

Next, representative examples of the diimonium salt compounds (I) represented by the above formula [4] are set forth.

| Compound No. | $R_{10}$ | $X^{\ominus}$ |
|---|---|---|
| I −1 | $CH_3$ | $AsF_6^{\ominus}$ |
| I −2 | $CH_3$ | $C\ell O_4^{\ominus}$ |
| I −3 | $CH_3$ | $SbF_6^{\ominus}$ |

| Compound No. | $R_{10}$ | $X^{\ominus}$ |
|---|---|---|
| I −4 | $C_2H_5$ | $AsF_6^{\ominus}$ |
| I −5 | $C_5H_5$ | $C\ell O_4^{\ominus}$ |
| I −6 | $C_2H_5$ | $BF_4^{\ominus}$ |
| I −7 | $n-C_3H_7$ | $AsF_6^{\ominus}$ |
| I −8 | $iso-C_3H_7$ | $C\ell O_4^{\ominus}$ |
| I −9 | $n-C_4H_9$ | $C\ell O_4^{\ominus}$ |
| I −10 | $n-C_4H_9$ | $AsF_6^{\ominus}$ |
| I −11 | $n-C_4H_9$ | $SbF_6^{\ominus}$ |
| I −12 | $n-C_4H_9$ | $BF_4^{\ominus}$ |
| I −13 | $n-C_4H_9$ | $I^{\ominus}$ |
| I −14 | $n-C_4H_9$ | 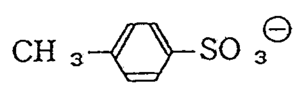 |
| I −15 | $t-C_4H_9$ | $C\ell O_4^{\ominus}$ |

| Compound No. | $R_{10}$ | $X^{\ominus}$ |
|---|---|---|
| I −16 | $t-C_4H_9$ | $AsF_6^{\ominus}$ |
| I −17 | $n-C_6H_{13}$ | $C\ell O_4^{\ominus}$ |
| I −18 | $n-C_8H_{17}$ | $AsF_6^{\ominus}$ |
| I −19 | $n-C_{12}H_{25}$ | $SbF_6^{\ominus}$ |
| I −20 | $C_2H_4OH$ | $SbF_6^{\ominus}$ |
| I −21 | $C_2H_4OH$ | $C\ell O_4^{\ominus}$ |
| I −22 | $C_2H_4OH$ | $NO_3^{\ominus}$ |
| I −23 | $C_2H_4OH$ | $SbF_6^{\ominus}$ |

The optical recording medium of the present invention can be made to have a structure as shown in Fig. 1. The optical recording medium shown in Fig. 1 can be formed by providing an organic thin film 2 containing at least a polymethine compound and an aminium salt compound or a diimonium salt compound on the substrate 1. Such organic thin film 2 can be formed by coating of a coating liquid in which the above compounds are mixed by dissolution or mixed by dispersion in an organic solvent.

In formation of the organic thin film 2, two or more kinds of the above compounds can be used, and further other dyes than the compounds of the above formulae [1-I] to [2-IV], such as polymethine, azulene, pyrylium, squarilium, croconium, triphenylmethane, xanthene, anthraquinone, cyanine, phthalocyanine, dioxadine, tetrahydrocholine, triphenothiazine, phnanthrene, metal chelate complex dyes, etc. or metals and metal compounds, such as Al, Te, Bi, Sn, In, Se, SnO, $TeO_2$, As, Cd, etc. may be mixed by dispersion or laminated.

Also, the above compounds may be contained as dispersed or dissolved in a binder. Examples of the binder may include cellulose esters such as nitrocellulose, cellulose phosphate, cellulose sulfate, cellulose acetate, cellulose propionate,cellulose butyrate, cellulose myristate, cellulose palmitate, cellulose acetate-propionate, cellulose acetate butyrate; cellulose ethers such as methyl cellulose, ethyl cellulose, propyl cellulose, butyl cellulose, etc.; vinyl resins such as polystyrene, polyvinyl choride, polyvinyl acetate, polyvinyl butyral, polyvinyl acetal, polyvinyl alcohol, polyvinyl pyrrolidone, etc.; copolymer resins such as styrene-butadiene copolymer, styrene-acrylonitrile copolymer, styrene-butadiene-acrylonitrile copolymer, vinyl chloride-vinyl acetate copolymer, etc.; acrylic resins such as polymethyl methacrylate, polymethyl acrylate, polybutyl acrylate, polyacrylic acid, polymethacrylic acid, polyacrylamide, polyacrylonitrile, etc.; polyesters such as polyethyleneterephthalate, etc.; polyarylate resins such as poly(4,4′-isopropylidenediphenylene-co-1,4-cyclohexylenedimethylenecarbonate), poly(ethylenedioxy-3,3′-phenylnethiocarbonate), poly(4,4′-isopropylidenediphenylene-carbonate-coterephthalate), poly(4,4′-isopropylidenediphenylene-carbonate),poly(4,4′-sec-buthylidenediphenylenecarbonate), poly(4,4′-isopropylidenediphenylene-carbonate-block-oxyethylene), etc.; or polyamides, polyimides, epoxy resins, phenol resins, polyolefins such as polyethylene, polypropylene, chlorinated polyethylene, etc.

Also, in the organic thin film 2, surfactants, antistatic agents, stabilizers, dispersing agents, flame retardants, lubricants, plasticizers, etc. may be contained.

The organic solvent which can be used during coating may differ on whether the coating liquid is formed in a dispersion or a solution, but may generally include alcohols such as methanol, ethanol, isopropanol, diacetone alcohol, etc.; ketones such as acetone, methyl ethyl ketone, cyclohexanone, etc.; amides such as N,N-dimethylformamide, N,N-dimethylacetamide, etc.; sulfoxides such as dimethyl sulfoxide, etc.; ethers such as tetrahydrofuran, dioxane, ethylene glycol monomethyl ether, etc.; esters such as methyl acetate, ethyl acetate, butyl acetate, etc.; aliphatic halogenated hydrocarbons such as chloroform, methylene chloride, dichloroethylene, carbon tetrachloride, trichloroethylene, etc.; aromatics such as benzene, toluene, xylene, monochlorobenzene, dichlorobenzene, etc.; or aliphatic hydrocarbons such as n-hexane, cyclohexane, ligroin, etc.

As the coating method, there may be employed dip coating, spray coating, spinner coating, bead coating, wire bar coating, blade coating, roller coating, curtain coating, etc.

The amount of the aminium salt compound and/or the diimonium salt compound added may be 1 to 60 wt.% in the organic thin film layer based on the total solids, preferably 5 to 40 wt.%. The dry film thickness of the organic thin film layer may be suitable 50 Å to 100 µm, preferably 200 Å to 1 µm.

As the substrate 1, plastics such as polyester, polycarbonate, acrylic resin, polyolefin resin, phenol resin, epoxy resin, polyamide, polyimide, etc., glasses or metals can be used.

Also, the present invention can be made to have a constitution provided with a subbing layer 3 and/or a protective layer 4 as shown in Fig. 2 through Fig. 4.

The subbing layer is provided for improvement of adhesiveness, for improvement of barrier characteristic against water or gas and storage stability of recording layer, improvement of reflectance, protection of the substrate from solvent, formation of pre-group and the effect of heat dissipation.

On the other hand, the protective layer is provided for protection from flaws, dust, contamination, etc. and for improvement of storage stability of the recording layer and reflectance.

Further, as another constitution of the optical recording medium of the present invention, it can be also made an air sandwich structure in which two sheets of recording medium with the same constitution as shown in Fig. 1 to Fig. 4 (in some cases, one sheet being made only of the substrate) and the recording layer 2 is arranged innerside thereof and sealed, or alternatively made the so called adhesion structure (plastered structure) adhered through the protective layer 4.

Example 1-1

On a polymethyl methacrylate (hereinafter abbreviated as "PMMA") with a diameter of 130 mmØ and a thickness of 1.2 mm, a pre-group with a thickness of 50 µ was provided by use of an epoxy-acrylate type UV-ray curable resin according to the 2P method (the photo-polymer method), and a liquid having the above polymethine type dye compound No. D-1 and the above aminium salt compound No. A-9 dissolved at a weight ratio of 80:20 in 1,2-dichloroethane was applied according to spinner coating, followed by drying, to obtain an organic thin film layer of 850 Å.

The thus prepared optical recording medium was mounted on a turn table, and under rotation of the turn table by a motor at 1800 rpm, information was written at a recording power of 6 mW and a recording frequency of 2MHz by use of a semiconductor laser of an oscillation wavelength of 830 nm on the organic thin film recording layer with a spot size of 1.5 µmØ, reproduced with a reading power of 0.8 mW, and the reproduced waveform was spectrally analyzed (scanning filter, band width 30 KHz) to measure the C/N ratio (carrier/oise ratio).

Next, the C/N ratio after reading for $10^6$ times of the same recorded portion of the recording medium under the same measurement conditions was measured.

Further, the same recording medium prepared under the same conditions was left to stand under the conditions of 60 °C, 95% RH for 3000 hours to perform environmental storage stability test, followed by measurement of reflectance (at 830 nm) and C/N ratio. Also, the same recording medium was irradiated with xenon lamp light of 1000 W/$m^2$ (300 - 900 nm) for 100 hours for testing light stability resistance, and thereafter reflectance (at 830 nm) and C/N ratio were measured. The results are shown in Table 1-1.

Table 1-1

| Example | Initial stage | | Repeated reproduction After $10^6$ times | Environmental storage stability 60°C 95% RH After 3000 hours | | Light resistant stability Xenon lamp 1000W/m² After 100 hours | |
|---|---|---|---|---|---|---|---|
| | Reflectance (%) | C/N (dB) | C/N (dB) | Reflectance (%) | C/N (dB) | Reflectance (%) | C/N (dB) |
| 1-1 | 25.0 | 57 | 55 | 23.9 | 55 | 22.5 | 53 |

<u>Examples 1-2 to 1-8</u>

By replacing the polymethine dye and the aminium salt compound used in Example 1-1 with the combinations shown below in Table 1-2, recording media were prepared according to the same procedure as in Example 1 to give optical recording media of Examples 1-2 to 1-8, respectively.

The optical recording media of the above Examples 1-2 to 1-8 were measured according to the same method as in Example 1-1 to obtain the results shown in Table 1-4.

Table 1-2

| Example | Polymethine type coloring matter (D) | Aminium salt compound (A) | Weight ratio (D:A) |
|---|---|---|---|
| 1-2 | D-4 | A-1 | 80 : 20 |
| 1-3 | D-7 | A-12 | 70 : 30 |
| 1-4 | D-8 | A-21 | 80 : 20 |
| 1-5 | D-13 | A-26 | 85 : 15 |
| 1-6 | D-19 | A-5 | 80 : 20 |
| 1-7 | D-24 | A-10 | 85 : 15 |
| 1-8 | D-25 | A-19 | 90 : 10 |

Comparative examples 1-1, 1-2

Optical recording media were prepared and evaluated according to the same method as in Example 1-1 except for omitting the aminium compounds No. A-9 and A-10, respectively, used in Examples 1-1 and 1-7. The results are shown in Table 1-4.

Examples 1-9 to 1-2

A liquid comprising a mixture of 4 parts by weight of a combination of a polymethine dye (D) and an aminium compound (A) shown below in Table 1-3 and 1 part by weight of a nitrocellulose resin (OH-less Lacquer produced by Dicel K.K.) with 95 parts by weight of methyl ethyl ketone was applied by spinner coating onto a polycarbonate substrate of 130 mm o in diameter and 1.2 mm in thickness provided with a pre-group to obtain an organic thin film recording layer with a dried film thickness of 950 Å.

The optical recording medium thus prepared was measured according to the same method as in Example 1-1 to give the results shown in Table 1-4.

Table 1-3

| Example | Polymethine type coloring matter (D) | Aminium salt compound (A) | Weight ratio (D:A) |
|---|---|---|---|
| 1-9 | D-2 | A-11 | 70 : 30 |
| 1-10 | D-16 | A-4 | 75 : 25 |
| 1-11 | D-20 | A-13 | 85 : 15 |
| 1-12 | D-22 | A-18 | 80 : 20 |

Table 1-4

| Example | Initial stage | | Repeated reproduction After $10^6$ times | Environmental storage stability 60°C 95% RH After 3000 hours | | Light resistant stability Xenon lamp 1000 W/m² After 100 hours | |
|---|---|---|---|---|---|---|---|
| | Reflectance (%) | C/N (dB) | C/N (dB) | Reflectance (%) | C/N (dB) | Reflectance (%) | C/N (dB) |
| 1-2 | 24.5 | 55 | 52 | 23.3 | 54 | 22.5 | 52 |
| 1-3 | 20.3 | 52 | 50 | 19.4 | 50 | 18.7 | 48 |
| 1-4 | 20.6 | 51 | 48 | 19.3 | 49 | 18.5 | 47 |
| 1-5 | 23.8 | 53 | 50 | 22.5 | 51 | 20.3 | 49 |
| 1-6 | 24.8 | 54 | 52 | 22.1 | 52 | 21.8 | 51 |
| 1-7 | 25.3 | 57 | 54 | 24.2 | 55 | 22.4 | 53 |
| 1-8 | 26.5 | 52 | 49 | 24.7 | 50 | 23.5 | 49 |
| Comparative example | | | | | | | |
| 1-1 | 19.8 | 50 | 36 | 16.3 | 45 | 13.1 | 32 |
| 1-2 | 20.3 | 51 | 32 | 17.8 | 46 | 12.6 | 30 |

Table 1-4 (continued)

| Example | Initial stage | | Repeated reproduction After $10^6$ times | Environmental storage stability 60°C 95% RH After 3000 hours | | Light resistant stability Xenon lamp 1000 W/m² After 100 hours | |
|---|---|---|---|---|---|---|---|
| | Reflectance (%) | C/N (dB) | C/N (dB) | Reflectance (%) | C/N (dB) | Reflectance (%) | C/N (dB) |
| Example | | | | | | | |
| 1-9 | 20.0 | 52 | 49 | 18.5 | 49 | 17.5 | 46 |
| 1-10 | 24.5 | 55 | 52 | 23.5 | 53 | 22.1 | 50 |
| 1-11 | 25.3 | 56 | 53 | 24.1 | 55 | 22.8 | 51 |
| 1-12 | 24.8 | 55 | 51 | 22.5 | 53 | 20.5 | 48 |

Examples 1-12 to 1-15

On a substrate of a polycarbonate of Waret size with a thickness of 0.4 mm (hereinafter abbreviated as "PC"), a pre-group was provided by the hot press method and a mixture of a plymethine dye and an aminium salt compound as indicated below in Table 1-5 in diacetoalcohol was applied by the bar coating method, followed by drying, to form an organic thin film recording layer of 850 Å. Further, on the layer, through an ethylene-vinyl acetate film, a PC substrate of Waret size with a thickness of 0.3 mm was provided according to the hot roll method to prepare an optical recording medium with a closely adhered structure.

The optical recording media of Examples 12 -15 thus prepared were each mounted on the stage driven in the X-Y direction, and information was written in the Y-axis direction with a spot size of 0.3 μmØ at a recording power of 4.0 mW and a recording pulse of 80 μ sec. by use of a semiconductor laser of oscillation wavelength of 830 nm from the PC substate side with a thickness of 0.4 mm on the organic thin recording layer, and reproduced with a reading power of 0.4 mW, to measure its contrast ratio [(A - B)/A: A is signal intensity at non-recorded portion and B is signal intensity at recorded portion].

Further, the same recording media prepared under the above conditions were subjected to the environmental storage stability tests and light stability resistance tests under the same conditions as in Example 1-1, and thereafter reflectance and contrast ratio were measured. The results are shown in Table 1-6.

Table 1-5

| Example | Polymethine type coloring matter (D) | Aminium salt compound (A) | Weight ratio (D:A) |
|---|---|---|---|
| 1-12 | D-1 | A-10 | 80 : 20 |
| 1-13 | D-6 | A-4 | 75 : 25 |
| 1-14 | D-17 | A-16 | 80 : 20 |
| 1-15 | D-21 | A-7 | 85 : 15 |

Table 1-6

| Example | Initial stage | | Environmental storage stability 60° C 95% RH After 3000 hours | | Light resistant stability Xenon lamp 1000 W/m² After 100 hours | |
|---|---|---|---|---|---|---|
| | Reflectance (%) | Contrast ratio | Reflectance (%) | Contrast ratio | Reflectance (%) | Contrast ratio |
| 1-12 | 15.3 | 0.82 | 14.5 | 0.80 | 12.8 | 0.73 |
| 1-13 | 14.8 | 0.80 | 14.1 | 0.77 | 12.1 | 0.70 |
| 1-14 | 15.1 | 0.80 | 14.3 | 0.78 | 11.9 | 0.69 |
| 1-15 | 15.8 | 0.83 | 15.2 | 0.81 | 13.3 | 0.74 |

Examples 1-16 to 1-22

In place of the aminium salt compound and the diimonium salt compound used in Example 1-1, recording media were prepared according to the combinations shown in Table 1-7, following otherwise the same procedure as in Example 1-1, to provide optical recording media of Examples 1-17 to 1-23, respectively.

The optical recording media of the above Examples 1-17 to 1-23 were measured according to the same method as in Example 1-1 to obtain the results shown in Table 1-9.

Table 1-7

| Example | Polymethine type coloring matter (D) | Diimonium salt compound (I) | Weight ratio (D:I) |
|---|---|---|---|
| 1-16 | D-1 | I-9 | 80 : 20 |
| 1-17 | D-4 | I-12 | 85 : 15 |
| 1-18 | D-8 | I-5 | 80 : 20 |
| 1-19 | D-13 | I-10 | 70 : 30 |
| 1-20 | D-19 | I-19 | 60 : 40 |
| 1-21 | D-24 | I-1 | 80 : 20 |
| 1-22 | D-25 | I-21 | 90 : 10 |

<u>Examples 1-23 to 1-26</u>

The aminium salt compound (A) used in Example 1-9 was replaced with the diimonium salt compound (I), and according to the combinations indicated in Table 1-8, recording media were prepared by the same method as in Example 1-1 to provide optical recording media of Examples 1-23 to 1-26.

The optical recording media of the above Examples 1-23 to 1-26 were measured according to the same method as in Example 1-1 to obtain the results shown in Table 1-9.

Table 1-8

| Example | Polymethine type coloring matter (D) | Diimonium salt compound (I) | Weight ratio (D:I) |
|---|---|---|---|
| 1-23 | D-2 | I-4 | 80 : 20 |
| 1-24 | D-16 | I-13 | 90 : 10 |
| 1-25 | D-20 | I-18 | 75 : 25 |
| 1-26 | D-22 | I-11 | 85 : 15 |

Table 1-9

| Example | Initial stage | | Repeated reproduction After $10^6$ times | Environmental storage stability 60° C 95% RH After 3000 hours | | Light resistant stability Xenon lamp 1000 W/m² After 100 hours | |
|---|---|---|---|---|---|---|---|
| | Reflectance (%) | C/N ratio (dB) | C/N ratio (dB) | Reflectance (%) | C/N ratio (dB) | Reflectance (%) | C/N ratio (dB) |
| 1-16 | 25.3 | 57 | 56 | 24.5 | 56 | 22.0 | 52 |
| 1-17 | 24.8 | 56 | 55 | 24.0 | 54 | 21.8 | 51 |
| 1-18 | 21.3 | 51 | 49 | 20.0 | 49 | 18.2 | 46 |
| 1-19 | 24.4 | 55 | 53 | 23.3 | 54 | 20.5 | 49 |
| 1-20 | 25.1 | 56 | 53 | 24.5 | 55 | 21.3 | 51 |
| 1-21 | 25.6 | 57 | 56 | 24.8 | 56 | 22.5 | 53 |
| 1-22 | 26.0 | 53 | 51 | 24.5 | 50 | 22.1 | 49 |
| 1-23 | 21.2 | 51 | 48 | 19.5 | 49 | 18.2 | 45 |
| 1-24 | 25.1 | 56 | 54 | 24.2 | 53 | 22.3 | 51 |
| 1-25 | 25.5 | 57 | 56 | 24.1 | 55 | 21.9 | 53 |
| 1-26 | 24.5 | 55 | 53 | 23.0 | 54 | 21.1 | 51 |

Examples 1-27 to 1-30

By replacing the aminium salt compound (A) used in Example 1-12 with the diimonium compound (I), recording media were prepared according to the combinations indicated in Table 1-10 in the same manner as in Example 1-12 to provide optical recording media of Examples 1-27 to 1-30, respectively.

The optical recording media of the above Examples 1-27 to 1-30 were measured in the same manner as in Example 1-12 to obtain the results as shown in Table 1-11.

Table 1-10

| Example | Polymethine type coloring matter (D) | Diimonium salt compound (I) | Weight ratio (D:I) |
|---|---|---|---|
| 1-27 | D-1 | I-10 | 80 : 20 |
| 1-28 | D-6 | I-7 | 85 : 15 |
| 1-29 | D-17 | I-4 | 75 : 25 |
| 1-30 | D-21 | I-16 | 80 : 20 |

Table 1-11

| | Initial stage | | Environmental storage stability 60° C 95% RH After 3000 hours | | Light resistant stability Xenon lamp 1000 W/m² After 100 hours | |
|---|---|---|---|---|---|---|
| Example | Reflectance (%) | Contrast ratio | Reflectance (%) | Contrast ratio | Reflectance (%) | Contrast ratio |
| 1-27 | 15.5 | 0.83 | 14.9 | 0.82 | 12.5 | 0.72 |
| 1-28 | 14.5 | 0.79 | 14.1 | 0.77 | 11.9 | 0.69 |
| 1-29 | 15.2 | 0.81 | 14.8 | 0.80 | 12.3 | 0.70 |
| 1-30 | 16.0 | 0.85 | 15.2 | 0.83 | 12.8 | 0.73 |

Example 1-31

By use of the optical recording medium prepared in Example 1-16, C/N ratio was measured by varying the recording laser power from 0.5 mW to 7 mW in the evaluation of Example 1-16 for examination of the threshold value. The results are shown in Fig. 5.

Comparative example 1-3

An optical recording medium was prepared and measured according to the same method as in Example 1-31 except for omitting the aminium salt compound in Example 1-31. The results are shown in Fig. 5.

For the optical recording medium of Example 1-31, a clear threshold value not recorded at a low power of laser power of 2 mW or less can be obtained. In contrast, in Comparative example 1-3, the threshold value was not clear as recorded at a lower power of 2 mW or lower. This indicates that deterioration will readily occur during repeated reproduction.

Also, for Example 1-31, higher C/N value could be obtained as compared with Comparative example 1-3.

Examples 1-32 to 1-33

By use of the polymethine dye (D-1) together with the aminium salt (A-11) in the case of Example 1-32 and the diimonium salt (I-9) in the case of Example 1-33, respectively, at a weight ratio of 70:30, optical recording media were prepared in the same manner as in Example 1-1 and these optical recording media were evaluated according to the same method as in Example 1-1 to obtain the results shown in Table 1-12.

Comparative examples 1-4 - 1-7

By use of the following compounds as the polymethine dye, optical recording media were prepared and evaluated similarly as in Examples 1-32 and 1-33. The results are shown in Table 1-12.

D-101

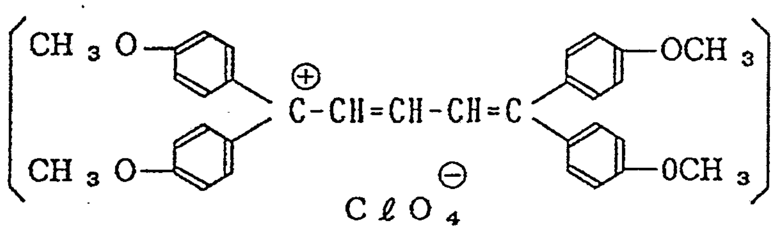

D-102

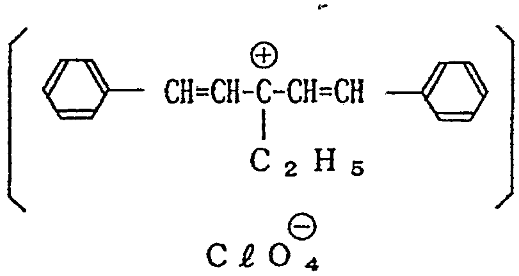

Table 1-12

| Example | Polymethine type coloring matter | Aminium salt or Diimonium salt | Initial stage | | Environmental storage stability 45°C 95% RH After 3000 hours | | Light resistant stability Xenon lamp $1000W/m^2$ After 100 hours | |
|---|---|---|---|---|---|---|---|---|
| | | | Reflectance (%) | C/N (dB) | Reflectance (%) | C/N (dB) | Reflectance (%) | C/N (dB) |
| 1-32 | D-1 | A-11 | 24.0 | 56 | 23.7 | 54 | 22.5 | 53 |
| 1-33 | D-1 | I-9 | 23.8 | 56 | 23.7 | 55 | 22.6 | 53 |
| Comparative Example | | | | | | | | |
| 1-4 | D-101 | A-11 | 23.0 | 54 | 22.0 | 52 | 19.7 | 49 |
| 1-5 | D-102 | A-11 | 22.6 | 53 | 22.0 | 52 | 19.8 | 48 |
| 1-6 | D-101 | I-9 | 23.1 | 54 | 22.2 | 52 | 19.7 | 48 |
| 1-7 | D-102 | I-9 | 22.9 | 52 | 22.1 | 50 | 19.8 | 48 |

Example 2-1

On a polymethyl methacrylate (hereinafter abbreviated as "PMMA") with a diameter of 130 mm o and a thickness of 1.2 mm, a pre-group with a thickness of 50 μ was provided by use of an epoxy-acrylate type UV-ray curable resin according to the 2P method (the photo-polymer method), and a liquid having the above polymethine type dye compound No. D-38 and the above aminium salt compound No. A-9 dissolved at a weight ratio of 80:20 in 1,2-dichloroethane was applied according to spinner coating, followed by drying, to obtain an organic thin film layer of 850 Å.

The thus prepared optical recording medium was mounted on a turn table, and under rotation of the turn table by a motor at 1800 rpm, information was written at a recording power of 6 mW and a recording frequency of 2MHz by use of a semiconductor laser of an oscillation wavelength of 830 nm on the organic thin film recording layer with a spot size of 1.5 μmØ, reproduced with a reading power of 0.8 mW, and the reproduced waveform was spectrally analyzed (scanning filter, band width 30 KHz) to measure the C/N ratio (carrier/oise ratio).

Next, with C/N ratio after reading for $10^6$ times of the same recorded portion of the recording medium under the same measurement conditions was measured.

Further, the same recording medium prepared under the same conditions was left to stand under the conditions of 45 °C, 95% RH for 3000 hours to perform environmental storage stability test, followed by measurement of reflectance (at 830 nm) and C/N ratio. Also, the same recording medium was irradiated with xenon lamp light of 1000 W/$m^2$ (300 - 900 nm) for 100 hours for testing light stability resistance, and thereafter reflectance (at 8.30 nm) and C/N ratio were measured. The results are shown in Table 2-1.

Table 2-1

| Example | Initial stage | | Repeated reproduction After $10^6$ times | Environmental storage stability 45° C 95% RH after 3000 hours | | Light resistant stability Xenon lamp 1000 W/m² After 100 hours | |
|---|---|---|---|---|---|---|---|
| | Reflectance (%) | C/N (dB) | C/N (dB) | Reflectance (%) | C/N (dB) | Reflectance (%) | C/N (dB) |
| 2-1 | 26.2 | 55 | 52 | 24.5 | 53 | 21.5 | 50 |

Examples 2-2 to 2-9

By replacing the polymethine dye and the aminium salt compound (A) used in Example 2-1 with the combinations shown below in Table 2-2, recording media were prepared according to the same procedure as in Example 2-1 to give optical recording media of Examples 2-2 to 2-9, respectively.

The optical recording media of the above Examples 2-2 to 2-9 were measured according to the same method as in Example 2-1 to obtain the results shown in Table 2-4.

Table 2-2

| Example | Polymethine compound (D) | Aminium salt compound (A) | Weight ratio (D:A) |
|---|---|---|---|
| 2-2 | D-28 | A-11 | 80 : 20 |
| 2-3 | D-33 | A-5 | 85 : 15 |
| 2-4 | D-46 | A-19 | 75 : 25 |
| 2-5 | D-59 | A-21 | 70 : 30 |
| 2-6 | D-67 | A-26 | 90 : 10 |
| 2-7 | D-75 | A-12 | 80 : 20 |
| 2-8 | D-89 | A-1 | 80 : 20 |
| 2-9 | D-96 | A-16 | 85 : 15 |

Examples 2-10 to 2-13

A liquid comprising a mixture of 4 parts by weight of a combination of a polymethine dye (D) and an aminium compound (A) shown below in Table 2-3 and 1 part by weight of a nitrocellulose resin (OH-less Lacquer produced by Dicel K.K.) with 95 parts by weight of methyl ethyl ketone was applied by spinner coating onto a polycarbonate substrate of 130 mm o in diameter and 1.2 mm in thickness provided with a pre-group to obtain an organic thin film recording layer with a dried film thickness of 950 Å.

The optical recording medium thus prepared was measured according to the same method as in Example 1-1 to give the results shown in Table 2-4.

Table 2-3

| Example | Polymethine compound (D) | Aminium salt compound (A) | Weight ratio (D:A) |
|---|---|---|---|
| 2-10 | D-31 | A-3 | 85 : 15 |
| 2-11 | D-53 | A-6 | 90 : 10 |
| 2-12 | D-71 | A-10 | 80 : 20 |
| 2-13 | D-93 | A-22 | 75 : 25 |

Comparative examples 2-1, 2-2

Optical recording media were prepared and evaluated according to the same method as in Example 2-1 except for omitting the aminium salt compounds No. A-9 and A-26 respectively used in Examples 2-1 and 2-6. The results are shown in Table 2-4.

Table 2-4

| Example | Initial stage | | Repeated re-reproduction After $10^6$ times | Environmental storage stability 45°C 95 % RH After 3000 hours | | Light resistant stability Xenon lamp 1000 W/m² After 100 hours | |
|---|---|---|---|---|---|---|---|
| | Reflectance (%) | C/N (dB) | C/N (dB) | Reflectance (%) | C/N (dB) | Reflectance (%) | C/N (dB) |
| 2-2 | 25.3 | 54 | 51 | 24.1 | 52 | 20.5 | 48 |
| 2-3 | 24.8 | 53 | 50 | 23.5 | 50 | 19.8 | 47 |
| 2-4 | 24.5 | 53 | 51 | 23.2 | 50 | 19.3 | 46 |
| 2-5 | 25.6 | 54 | 50 | 24.1 | 52 | 20.8 | 49 |
| 2-6 | 23.1 | 50 | 47 | 21.5 | 48 | 17.6 | 44 |
| 2-7 | 24.7 | 54 | 52 | 21.3 | 49 | 19.8 | 47 |
| 2-8 | 24.3 | 52 | 50 | 22.2 | 50 | 18.5 | 46 |
| 2-9 | 22.5 | 48 | 46 | 21.0 | 46 | 17.8 | 43 |
| 2-10 | 24.5 | 54 | 51 | 22.8 | 52 | 20.7 | 49 |
| 2-11 | 25.2 | 55 | 51 | 23.4 | 52 | 20.6 | 48 |
| 2-12 | 23.4 | 51 | 48 | 22.1 | 49 | 19.9 | 46 |
| 2-13 | 24.4 | 53 | 50 | 23.2 | 50 | 20.1 | 48 |
| Comparative example | | | | | | | |
| 2-1 | 25.8 | 51 | 32 | 14.3 | 40 | 12.1 | 30 |
| 2-2 | 23.5 | 46 | 28 | 12.8 | 36 | 10.9 | 24 |

Examples 2-14 to 2-17

On a substrate of a polycarbonate of Waret size with a thickness of 0.4 mm (hereinafter abbreviated as "PC"), a pre-group was provided by the hot press method and a mixture of a cyclic polymethine compound and an aminium salt compound as indicated below in Table 2-5 in diacetoalcohol was applied by the bar coating method, followed by drying, to form an organic thin film recording layer of 850 Å. Further, on the layer, through an ethylene-vinyl acetate film, a PC substrate of Waret size with a thickness of 0.3 mm was provided according to the hot roll method to prepare an optical recording medium with a closely adhered structure.

The optical recording media of Examples 2-14 to 2-17 thus prepared were each mounted on the stage driven in the X-Y direction, and information was written in the Y-axis direction with a spot size of 3.0 μmo at a recording power of 4.0 mW and a recording pulse of 80 u sec. by use of a semiconductor laser of oscillation wavelength of 830 nm from the PC substate side with a thickness of 0.4 mm on the organic thin recording layer, and reproduced with a reading power of 0.4 mW, to measure its contrast ratio [(A - B)/A: A is signal intensity at non-recorded portion and B is signal intensity at recorded portion].

Further, the same recording media prepared under the above conditions were subjected to the environmental storage stability tests and light stability resistance tests under the same conditions as in Example 2-1, and thereafter reflectance and contrast ratio were measured. The results are shown in Table 2-6.

Table 2-5

| Example | Polymethine compound (D) | Aminium salt compound (A) | Weight ratio (D:A) |
|---|---|---|---|
| 2-14 | D-28 | A-8 | 75 : 25 |
| 2-15 | D-47 | A-11 | 80 : 20 |
| 2-16 | D-69 | A-18 | 85 : 15 |
| 2-17 | D-86 | A-23 | 70 : 30 |

Table 2-6

| Example | Initial stage | | Environmental storage stability 45° C 95% RH After 3000 hours | | Light resistant stability Xenon lamp 1000 W/m² After 100 hours | |
|---|---|---|---|---|---|---|
| | Reflectance (%) | Contrast ratio | Reflectance (%) | Contrast ratio | Reflectance (%) | Contrast ratio |
| 2-14 | 14.8 | 0.81 | 14.0 | 0.79 | 12.5 | 0.76 |
| 2-15 | 15.0 | 0.82 | 14.1 | 0.79 | 12.3 | 0.75 |
| 2-16 | 14.5 | 0.80 | 13.8 | 0.78 | 11.5 | 0.72 |
| 2-17 | 14.9 | 0.80 | 14.0 | 0.78 | 11.8 | 0.74 |

Examples 2-18 to 2-21

In place of the aminium salt compound, the diimonium salt compound was used, and recording media were prepared according to the combinations shown in Table 2-7, following otherwise the same procedure as in Example 2-18 to 2-21, respectively.

The optical recording media of the above Examples 2-18 to 2-21 were measured according to the same method as in Example 2-1 to obtain the results shown in Table 2-9.

Table 2-7

| Example | Polymethine compound (D) | Diimonium salt compound (I) | Weight ratio (D:I) |
| --- | --- | --- | --- |
| 2-18 | D-38 | I-9 | 80 : 20 |
| 2-19 | D-70 | I-26 | 75 : 25 |
| 2-20 | D-46 | I-22 | 80 : 20 |
| 2-21 | D-92 | I-19 | 75 : 25 |

Examples 2-22 to 2-25

In place of the aminium salt compound, the diimonium salt compound was used, and recording media were prepared according to the combinations shown in Table 2-8, following otherwise the same procedure as in Examples 2-10, to provide optical recording media of Examples 2-22 to 2-25, respectively.

The optical recording media of the above Examples 2-22 to 2-25 were measured according to the same method as in Example 2-1 to obtain the results shown in Table 2-9.

Table 2-8

| Example | Polymethine compound (D) | Diimonium salt compound (I) | Weight ratio (D:I) |
|---|---|---|---|
| 2-22 | D-29 | I-6 | 80 : 20 |
| 2-23 | D-56 | I-2 | 75 : 25 |
| 2-24 | D-76 | I-11 | 80 : 20 |
| 2-25 | D-95 | I-18 | 85 : 15 |

Table 2-9

| Example | Initial stage | | Repeated reproduction After $10^6$ times | Environmental storage stability 45°C 95 % RH After 3000 hours | | Light resistant stability Xenon lamp 1000 W/m² After 100 hours | |
|---|---|---|---|---|---|---|---|
| | Reflectance (%) | C/N (dB) | C/N (dB) | Reflectance (%) | C/N (dB) | Reflectance (%) | C/N (dB) |
| 2-18 | 25.0 | 55 | 53 | 24.2 | 53 | 21.3 | 49 |
| 2-19 | 24.5 | 54 | 53 | 23.8 | 52 | 20.8 | 49 |
| 2-20 | 24.8 | 54 | 51 | 22.6 | 52 | 20.1 | 48 |
| 2-21 | 25.2 | 55 | 54 | 24.5 | 53 | 21.5 | 50 |
| 2-22 | 23.2 | 52 | 50 | 22.5 | 50 | 19.6 | 47 |
| 2-23 | 24.0 | 52 | 51 | 23.1 | 50 | 18.5 | 46 |
| 2-24 | 23.8 | 53 | 52 | 23.0 | 51 | 19.7 | 47 |
| 2-25 | 24.3 | 52 | 50 | 22.9 | 50 | 19.8 | 48 |

Examples 2-26 to 2-29

The aminium salt compound (A) used in Example 2-14 was replaced with the diimonium salt compound (I), and according to the combinations indicated in Table 2-10, recording media were prepared by the same method as in Example 2-14 to provide optical recording media of Examples 2-26 to 2-29.

The optical recording media of the above Examples 2-26 to 2-29 were measured according to the same method as in Example 2-14 to obtain the results shown in Table 2-11.

Table 2-10

| Example | Polymethine compound (D) | Diimonium salt compound (I) | Weight ratio (D:I) |
|---|---|---|---|
| 2-26 | D-35 | I-12 | 80 : 20 |
| 2-27 | D-54 | I-5 | 70 : 30 |
| 2-28 | D-64 | I-9 | 75 : 25 |
| 2-29 | D-83 | I-22 | 80 : 20 |

Table 2-11

| Example | Initial stage | | Environmental storage stability 45° C 95% RH After 3000 hours | | Light resistant stability Xenon lamp 1000 W/m² After 100 hours | |
|---|---|---|---|---|---|---|
| | Reflectance (%) | Contrast ratio | Reflectance (%) | Contrast ratio | Reflectance (%) | Contrast ratio |
| 2-26 | 15.4 | 0.81 | 14.5 | 0.79 | 12.3 | 0.71 |
| 2-27 | 14.6 | 0.80 | 14.0 | 0.77 | 12.0 | 0.69 |
| 2-28 | 15.2 | 0.80 | 14.5 | 0.78 | 12.5 | 0.72 |
| 2-29 | 14.5 | 0.78 | 13.8 | 0.75 | 11.8 | 0.68 |

Examples 2-30

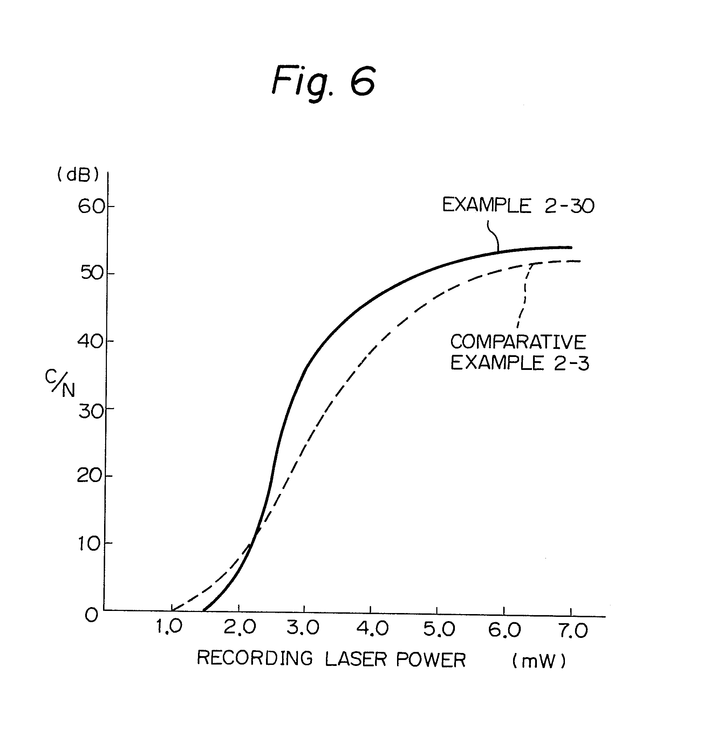

In evaluation of Example 2-19 by use of the optical recording medium prepared in Example 2-19, C/N ratio was measured by varying the recording laser power from 0.5 mW to 7 mW for examination of the threshold value. The results are shown in Fig. 6.

Comparative example 2-3

An optical recording medium was prepared and measured according to the same method as in Example 2-30 except for omitting the aminium salt compound in Example 2-30. The results are shown in Fig. 6.

For the optical recording medium of Example 2-30, a clear threshold value not recorded at a low power of laser power of 2 mW or less can be obtained. In contrast, in Comparative example 2-3, the threshold value was not clear as recorded at a lower power of 2 mW or lower. This indicates that deterioration will readily occur during repeated reproduction.

Also, for Example 2-30, higher C/N value could be obtained as compared with Comparative example 2-3.

Examples 2-31 to 2-48

By use of the polymethine type dyes and the aminium salt (A-11) or the diimonium salt (I-9) as shown in Table 2-12 each at a weight ratio of 70:30, optical recording media were prepared in the same manner as in Example 2-1, and their evaluations were performed. The results are shown in Table 2-12.

Comparative examples 2-4 to 2-19

By use of the poymethine type dyes shown below and the aminium salt (A-11) or the diimonium salt (I-9), optical recording media were prepared in the same manner as in Example 2-31 and evaluated. The results are shown in Table 2-12.

D-103

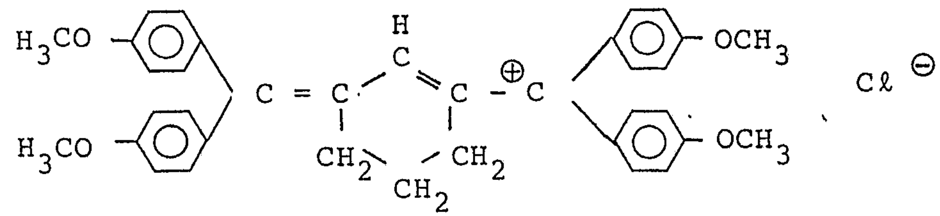

D-104

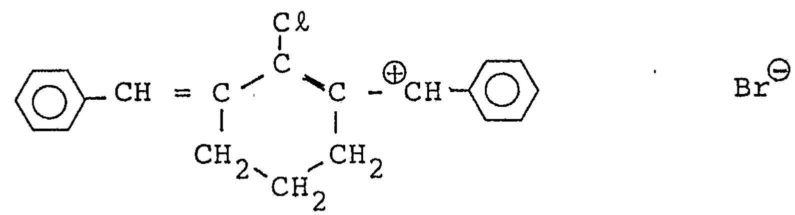

D-105

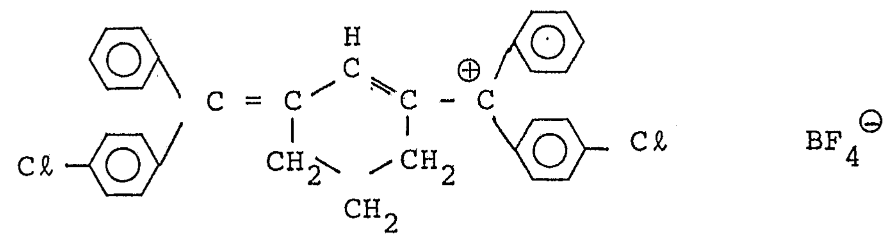

D-106

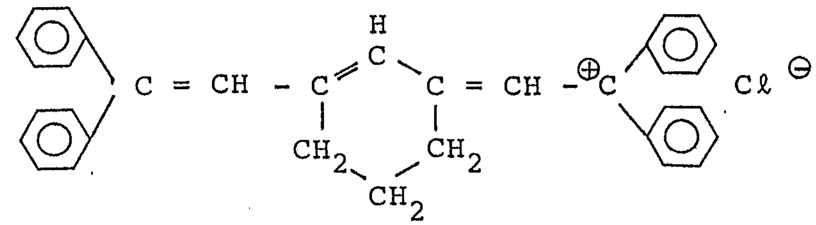

D-107

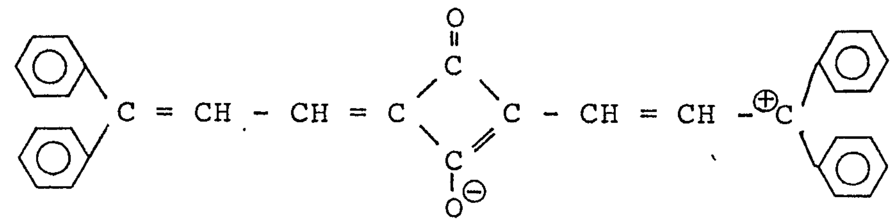

D-108

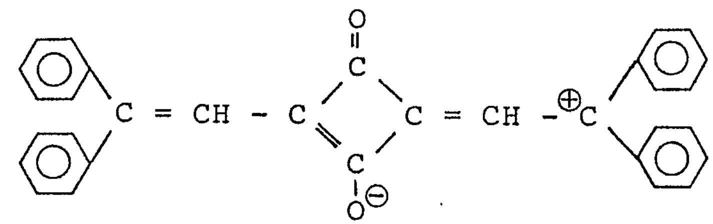

D-109

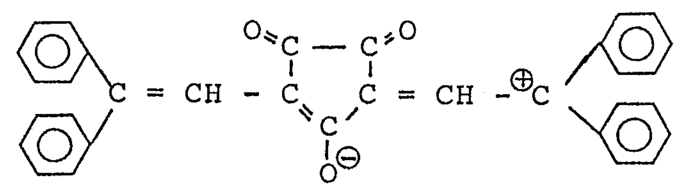

D-110

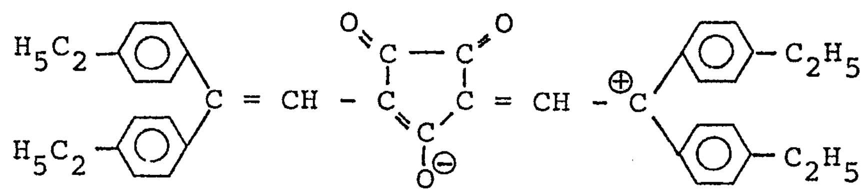

Table 2-12

| Example | Polymethine type coloring matter | Aminium salt or Diimonium salt | Initial state | | Environmental storage stability 45°C 95% RH After 3000 hours | | Light resistant stability Xenon lamp 1000 $W/m^2$ After 100 hours | |
|---|---|---|---|---|---|---|---|---|
| | | | Reflectance (%) | C/N (dB) | Reflectance (%) | C/N (dB) | Reflectance (%) | C/N (dB) |
| 2-31 | D-28 | A-11 | 25.0 | 54 | 24.1 | 52 | 20.5 | 48 |
| 2-32 | D-29 | A-11 | 23.2 | 52 | 22.5 | 50 | 19.6 | 47 |
| 2-33 | D-31 | A-11 | 24.8 | 53 | 22.8 | 52 | 20.7 | 49 |
| 2-34 | D-38 | A-11 | 25.0 | 54 | 23.8 | 51 | 20.8 | 49 |
| 2-35 | D-51 | A-11 | 23.4 | 51 | 22.1 | 49 | 19.9 | 46 |
| 2-36 | D-69 | A-11 | 24.4 | 50 | 22.6 | 48 | 19.6 | 44 |
| 2-37 | D-70 | A-11 | 24.7 | 53 | 22.3 | 49 | 20.3 | 47 |
| 2-38 | D-71 | A-11 | 23.3 | 52 | 22.2 | 50 | 19.5 | 46 |
| 2-39 | D-88 | A-11 | 24.1 | 49 | 23.0 | 47 | 19.8 | 45 |
| 2-40 | D-28 | I-9 | 24.8 | 53 | 24.2 | 52 | 20.7 | 48 |
| 2-41 | D-29 | I-9 | 23.1 | 52 | 22.5 | 50 | 19.8 | 48 |
| 2-42 | D-31 | I-9 | 24.9 | 53 | 22.7 | 51 | 20.6 | 48 |
| 2-43 | D-38 | I-9 | 24.8 | 53 | 22.4 | 51 | 20.5 | 47 |

| | | | | | | | | |
|---|---|---|---|---|---|---|---|---|
| 2-44 | D-51 | I-9 | 23.6 | 51 | 22.6 | 49 | 20.0 | 46 |
| 2-45 | D-69 | I-9 | 24.4 | 50 | 22.7 | 47 | 19.8 | 45 |
| 2-46 | D-70 | I-9 | 24.5 | 52 | 22.5 | 48 | 20.1 | 47 |
| 2-47 | D-71 | I-9 | 23.8 | 52 | 22.2 | 50 | 19.6 | 47 |
| 2-48 | D-88 | I-9 | 24.0 | 50 | 22.8 | 47 | 19.7 | 45 |
| Comparative Example | | | | | | | | |
| 2-4 | D-103 | A-11 | 24.5 | 52 | 24.0 | 50 | 18.0 | 46 |
| 2-5 | D-104 | A-11 | 25.4 | 52 | 24.8 | 51 | 18.7 | 46 |
| 2-6 | D-105 | A-11 | 24.2 | 51 | 22.2 | 47 | 18.8 | 45 |
| 2-7 | D-106 | A-11 | 24.8 | 50 | 23.0 | 49 | 17.9 | 46 |
| 2-8 | D-107 | A-11 | 23.7 | 48 | 21.7 | 46 | 17.6 | 42 |
| 2-9 | D-108 | A-11 | 24.7 | 49 | 22.5 | 46 | 18.0 | 44 |
| 2-10 | D-109 | A-11 | 24.1 | 49 | 22.4 | 47 | 17.7 | 43 |
| 2-11 | D-110 | A-11 | 24.3 | 50 | 21.8 | 47 | 17.8 | 44 |
| 2-12 | D-103 | I-9 | 24.4 | 52 | 23.7 | 50 | 17.8 | 46 |

| | | | | | | | | |
|---|---|---|---|---|---|---|---|---|
| 2-13 | D-104 | I-9 | 25.2 | 51 | 24.5 | 50 | 18.5 | 45 |
| 2-14 | D-105 | I-9 | 24.0 | 51 | 22.6 | 47 | 17.8 | 46 |
| 2-15 | D-106 | I-9 | 24.8 | 50 | 22.8 | 49 | 17.7 | 45 |
| 2-16 | D-107 | I-9 | 23.6 | 49 | 21.9 | 46 | 17.4 | 42 |
| 2-17 | D-108 | I-9 | 23.5 | 49 | 22.3 | 45 | 18.0 | 44 |
| 2-18 | D-109 | I-9 | 24.6 | 49 | 22.3 | 46 | 17.2 | 43 |
| 2-19 | D-110 | I-9 | 24.8 | 50 | 21.9 | 47 | 17.1 | 43 |

**Claims**

1. An optical recording medium, comprising at least one polymethine dye selected from the formulae [1-I] through [2-IV] shown below and, a compound selected from aminium salt compounds and diimonium salt compounds contained in the recording layer:

Formula [1-I]

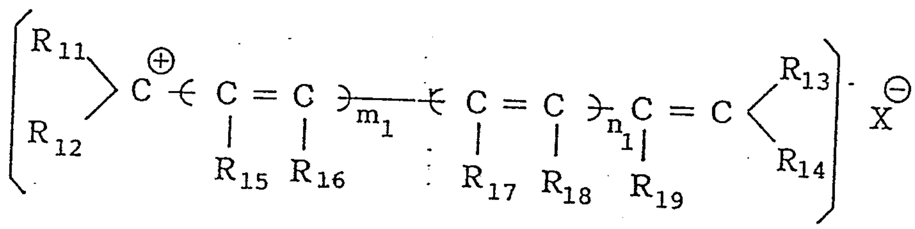

Formula [2-I]

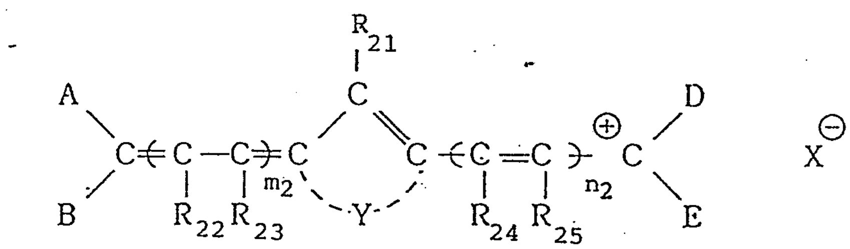

Formula [2-II]

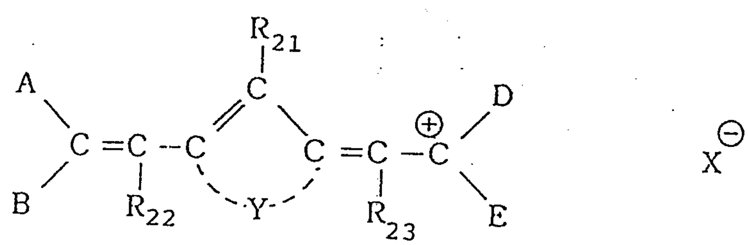

Formula [2-III]

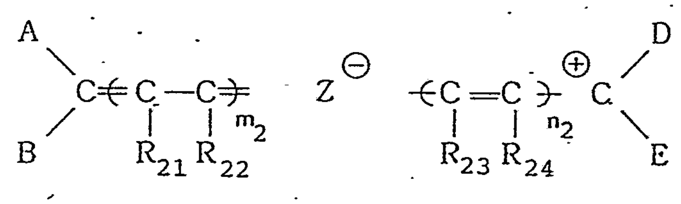

Formula [2-IV]

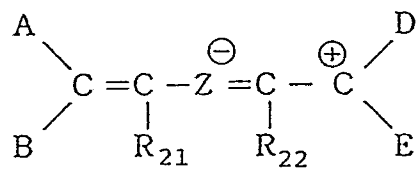

wherein $R_{11}$, $R_{12}$, $R_{13}$, $R_{14}$, $R_{15}$, $R_{16}$, $R_{17}$, $R_{18}$ and $R_{19}$ each represent hydrogen atom, halogen atom, substituted or unsubstituted alkyl group, substituted or unsubstituted aryl group, substituted or unsubstituted styryl group, or substituted or unsubstituted heterocyclic group, with proviso that at least one of $R_{11}$, $R_{12}$, $R_{13}$ and $R_{14}$ is a dialkylamino-substituted aryl group; $m_1$ is 0 or 1; $n_1$ is 0, 1 or 2; A, B, D and E each represent hydrogen atom, halogen atom, substituted or unsubstituted alkyl group, alkenyl group, substituted or unsubstituted aralkyl group, substituted or unsubstituted aryl group, with proviso that at least one of A, B, D and E is dialkylamino-substituted aryl group; $R_{21}$, $R_{22}$, $R_{23}$, $R_{24}$ and $R_{25}$ each represent hydrogen atom, halogen atom or alkyl group; $m_2$ and $n_2$ are each 0, 1 or 2; Y represents a divalent residue having a group of atoms necessary for the completion of a 5-membered or 6-membered ring; $Z^{\ominus}$ represents

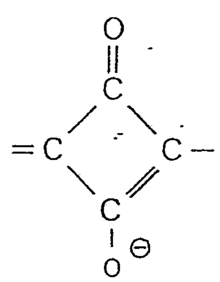

or

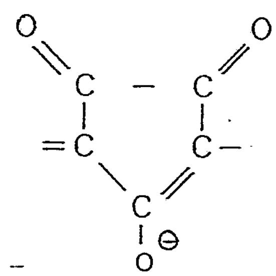

$X^{\ominus}$ represents an anion.

2. An optical recording medium according to Claim 1, wherein said aminium salt compound is a compound represented by the formula [3] shown below:

Formula [3]

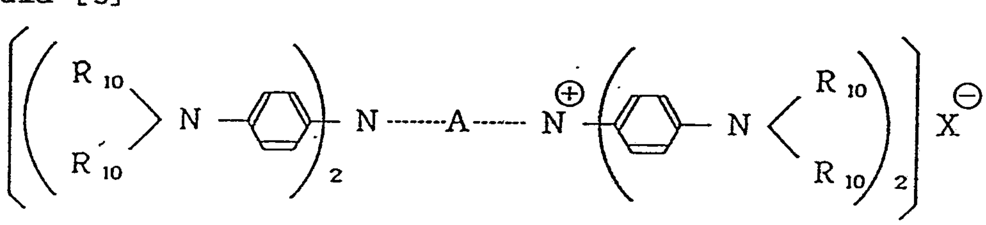

wherein $R_{10}$ may be either the same or different and represent hydrogen atom, substituted or unsubstituted alkyl group; A represents

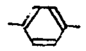 or 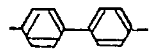

and X⊖ is an anion.

3. An optical recording medium according to Claim 1, wherein said diimonium salt compound is a compound represented by the formula [4] shown below:

Formula [4]

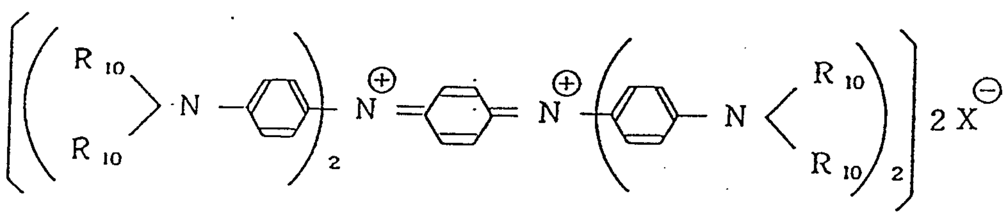

wherein $R_{10}$ may be either the same or different and represent hydrogen atom, substituted or unsubstituted alkyl group; and X⊖ is an anion.

4. An optical recording medium according to Claim 1, wherein in the polymethine dye represented by the formula [1-I], at least one of $R_{11}$ and $R_{12}$ and at least one of $R_{13}$ and $R_{14}$ are dialkylamino-substituted aryl groups.

5. An optical recording medium according to Claim 1, wherein in the polymethine dyes represented by the formulae [2-I] to [2-IV], at least one of A and B and at least one of D and E are dialkylamino-substituted aryl groups.

6. An optical recording medium according to any of Claims 1 to 5, wherein the dialkylamino-substituted aryl group is a dialkylamino-substituted aryl group having an alkyl with 1 to 4 carbon atoms.

7. An optical recording medium according to Claim 1, wherein the compound selected from aminium salt compounds and diimonium salt compounds is contained in an amount of 1 to 60 wt.% in the recording layer.

8. An optical recording medium according to Claim 7, wherein the compound selected from aminium salt compounds and diimonium salt compounds is contained in an amount of 5 to 40 wt.% in the recording layer.

9. An optical recording medium according to Claim 1, which is in the shape of a card.

0264274

Fig. 1

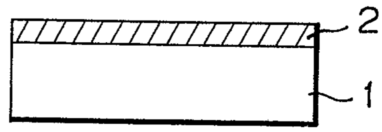


Fig. 2

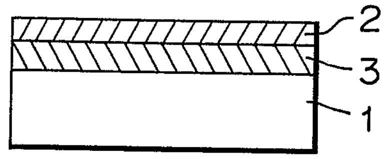


Fig. 3

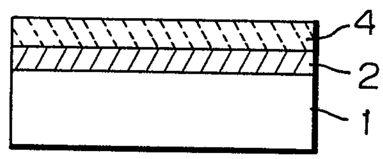


Fig. 4

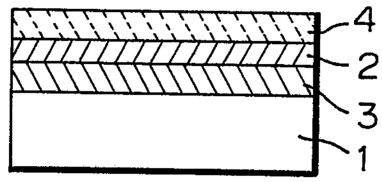

0264274

Fig. 5

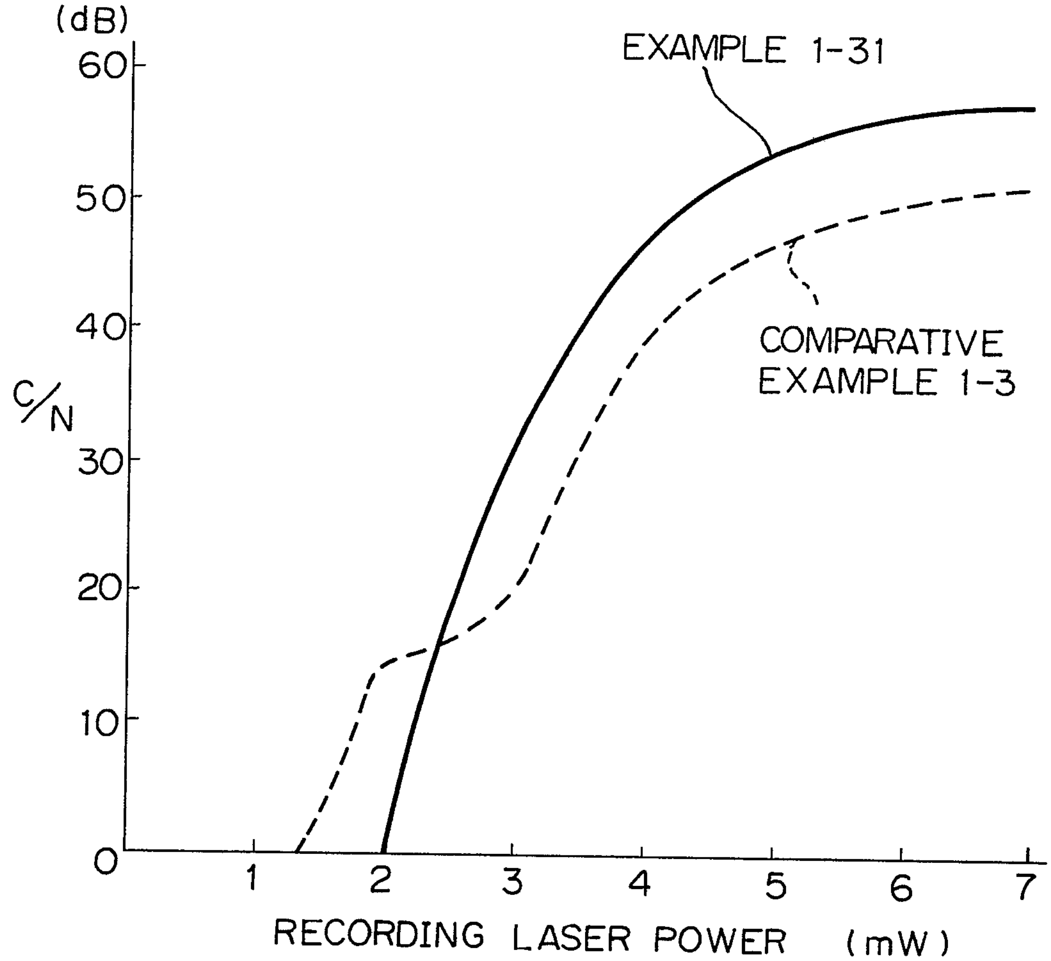

0264274

Fig. 6